# EUROPEAN PATENT APPLICATION

(11) **EP 1 956 070 A1**
(43) Date of publication of application: **13.08.2008**
(21) Application number: 06834055.3
(22) Date of filing: 29.11.2006
(51) Int. Cl.: C10L 1/08, C10G 45/54

(54) **GAS OIL COMPOSITION**

(30) Priority: 30.11.2005 JP 2005347275; 30.11.2005 JP 2005347276; 17.05.2006 JP 2006138363; 17.05.2006 JP 2006138364
(71) Applicant: Nippon Oil Corporation, Tokyo 105-8412 (JP)
(72) Inventor: SUGANO, Hideaki, Yokohama-shi, Kanagawa 231-0815 (JP); HIROSE, Masanori, Yokohama-shi, Kanagawa 231-0815 (JP); KOYAMA, Akira, Yokohama-shi, Kanagawa 231-0815 (JP); IGUCHI, Yasutoshi, Yokohama-shi, Kanagawa 231-0815 (JP); IKI, Hideshi, Yokohama-shi, Kanagawa 231-0815 (JP); AOKI, Yuko, Yokohama-shi, Kanagawa 231-0815 (JP)
(74) Representative: Grünecker, Kinkeldey, Stockmair & Schwanhäusser Anwaltssozietät
(86) International application number: PCT/JP2006/324300
(87) International publication number: WO 2007/064015

(57) **Abstract**

Provided is a gas oil composition which is excellent in life cycle CO₂ emission properties, oxidation stability, less affective to parts properties, and low temperature startability and comprises a base gas oil produced by contacting an animal or vegetable fat and/or a component originating therefrom, with a hydrotreating catalyst containing at least one or more metals selected from the group consisting of the Groups 6A and 8 metals of the periodic table and an inorganic oxide with acidic properties, under hydrogen pressure, the sulfur and oxygen contents of the gas oil composition being 5 ppm by mass or less and 1 percent by mass or less, respectively.

## Description

### [Field of the Invention]

The present invention relates to gas oil compositions which comprise an environment friendly base gas oil produced from an animal or vegetable fat and/or a component originating therefrom, as the raw material and have excellent life cycle CO₂ emission properties, oxidation stability, less affective to parts properties, and low-temperature startability.

### [Background of the Invention]

Conventional base gas oils are known to be produced by subjecting a straight gas oil or straight kerosene, produced by atmospheric distillation of crude oil to hydrorefining or hydrodesulfurization. Conventional gas oil compositions are produced by blending one or more types of these base gas oils and base kerosenes. If necessary, these gas oil compositions are blended with a cetane number improver or a detergent (see, for example, non-patent document 1 below).

Patent document 1 below discloses a method for producing hydrocarbons comprising reacting natural fats, waste natural fats or their derivatives with activated hydrogen in the presence of a catalyst to be selected from the group consisting of a metallic catalyst, an alloy catalyst, a metal-supporting catalyst, and an alloy-supporting catalyst, for the purpose of providing a method for producing hydrocarbons by using natural fats or their derivatives, food oil wastes and the like as the raw material.

Patent document 2 discloses a fuel composition for diesel engines, comprising 0.1 to 99 percent by volume of a component or a mixture of components, produced from biological raw materials originating from plants and/or animals and/or fish and 0 to 20 percent by volume of an oxygen-containing component. Both of the components are mixed with diesel components based on crude oil and/or fractions from Fischer-Tropsch process.

It is, however, very difficult to produce a fuel of such high quality that it can achieve all requisite performances such as life cycle CO₂ emission properties, fuel efficiency, oxidation stability, less affective to parts properties, and low-temperature startability in a higher level. Further, no practical process for producing such a fuel further capable of meeting all kinds of the performances required for commercially available fuel oils has not been disclosed.
Non-patent document 1: Konishi Seiichi, "Nenryo Kogaku Gairon", Shokabo Publishing Co., Ltd., March, 1991, pages 136 to 144
Patent document 1: Japanese Patent Laid-Open Publication No. 2003-171670
Patent document 2: Japanese Patent Laid-Open Publication No. 2005-538204

### [Disclosure of the Invention]

In recent years, gas oil, which is fuel for internal combustion engines has been required to be decreased in sulfur and aromatic contents in an effort to improve the air environment and reduce the environment load rapidly. At the same time, in order to cope with the global warming issue, gas oil has also been required to possess fuel properties contributive to a further improvement in fuel efficiency and effective in carbon dioxide (CO₂) reduction. As one means for achieving these objects, it has been studied to use synthetic fuels and bio diesel fuels (hereinafter referred to as "BDF") which are reproducible energies, as alternative fuels.

BDF is mainly composed of a fatty acid alkyl ester mixture produced from natural animal and vegetable fats and thus contains almost no aromatic compound largely contributive to production of soot discharged with an exhaust gas or no sulfur component giving significant influences on poisoning of an exhaust-gas after-treatment device. Furthermore, BDF itself is an oxygen-containing compound having oxygen in its molecules and thus has been attracted as a dominant possibility for an alternative fuel. Since BDF is positioned as a reproducible energy because of its origin from a plant, the carbon dioxide caused by BDF is not counted as the emissions under the carbon dioxide reduction protocol entered among nations in 1997, so-called Kyoto Protocol, and BDF has, therefore, political merits.

However, fatty acid alkyl esters produced from natural animal and vegetable fats contain intrinsically a large quantity of heavy components and thus are poor in burnout properties upon combustion in engines, possibly leading to increased emissions of unburned hydrocarbons. BDF containing a large quantity of a fatty acid alkyl ester having many saturated fatty acid groups is poor in handling characteristics as fuel and finds it difficult to ensure low temperature fluidity because it is solid at ambient temperatures. BDF containing a large quantity of a fatty acid alkyl ester containing many unsaturated fatty acid groups is poor in oxidation stability due to its chemical composition, possibly leading to deterioration of color, sludge formation, and adverse affects on engine parts. Furthermore, fatty acid glycerides and alkyl alcohols, which are the raw materials for producing the fatty acid alkyl ester and glycerin mixtures which are by-products thereof may significantly give adverse affects on engine parts and fuel injection systems.

For a gas oil to be used in cold districts, it is difficult to maintain its low temperature performances at a temperature of -15°C to -20°C at which No. 3 gas oils classified in accordance with the JIS gas oil use guidelines are to be used. Existing low temperature fluidity improvers are supposed to be effective to hydrocarbons. Most of them are thus less effective to BDF.

These disadvantages are those that the existing gas oils have never suffered from and still remain as problems not only when BDF is used alone but also when BDF is used in the form of a mixture with an existing gas oil or the like. It is thus necessary to not only pay attention to the properties of BDF but also pay more attention than ever to the oxidation stability, low temperature performance and combustibility of the mixture of BDF with an existing gas oil.

Therefore, the use of BDF which is a fatty acid alkyl ester mixture produced from animal and vegetable fats fails to provide a gas oil composition which is reduced in harmful exhaust components and life cycle CO₂ emissions, can improve fuel efficiency, gives less adverse affect on parts, and has excellent exhaust gas properties, oxidation stability, and low temperature startability. Since these engine performances are closely related to other fuel properties, it is very difficult to produce a fuel of high quality which can satisfy all of these requisite performances in a higher level. Furthermore, there has not existed any example or idea on the basis of studies of a fuel which can satisfy all the performances required for commercially available fuel oils and a realistic process for producing such a fuel.

The present invention was made in view of the above-described situations and has an object to provide a gas oil composition which comprises an environment friendly base gas oil produced from a triglyceride-containing hydrocarbon, which is an animal or vegetable fat or a component originating therefrom, and has excellent life cycle CO₂ emission properties, fuel efficiency, oxidation stability, less affective to parts properties, and low temperature startability.

As a result of extensive studies and researches, the inventors has accomplished the present invention.

That is, the present invention relates to a gas oil composition comprising a base gas oil produced by contacting an animal or vegetable fat and/or a component originating therefrom, with a hydrotreating catalyst containing at least one or more metals selected from the group consisting of the Groups 6A and 8 metals of the periodic table and an inorganic oxide with acidic properties, under hydrogen pressure, the sulfur and oxygen contents of the gas oil composition being 5 ppm by mass or less and 1 percent by mass or less, respectively.

The present invention also relates to a gas oil composition comprising a base gas oil produced by contacting a mixed oil of an animal or vegetable fat and/or a component originating therefrom and a petroleum base oil produced by refining crude oil, with a hydrotreating catalyst containing at least one or more metals selected from the group consisting of the Groups 6A and 8 metals of the periodic table and an inorganic oxide with acidic properties under hydrogen pressure, the sulfur and oxygen contents of the gas oil composition being 5 ppm by mass or less and 1 percent by mass or less, respectively.

The present invention also relates to a gas oil composition comprising a base gas oil mixed with a hydrorefined oil from crude oil at a ratio of 30 to 50 percent by volume : 50 to 70 percent by volume, the base gas oil being produced by contacting an animal or vegetable fat and/or a component originating therefrom, with a catalyst comprising a porous inorganic oxide containing two or more elements selected from the group consisting of aluminum, silicon, zirconium, boron, titanium, and magnesium and at least one or more metals selected from the group consisting of the Group 8 metals of the periodic table supported thereon, under the conditions where the hydrogen pressure is from 2 to 13 MPa, the liquid hourly space velocity is from 0.1 to 3.0 h⁻¹, the hydrogen/oil ratio is from 150 to 1500 NL/L, and the reaction temperature is from 150 to 380°C, and the gas oil composition having the following properties:
a 90% distillation temperature of 360°C or lower;
a total aromatic content of 15 percent by volume or less;
a cetane index of 45 or greater;
a sulfur content of 5 ppm by mass or less;
an oxygen content of 1 percent by mass or less;
a triglyceride content of 0.01 percent by mass or less;
an acid number of 0.13 mgKOH/g or less;
an increase in acid number after an oxidation stability test of 0.12 mgKOH/g or less; and
a single ring naphthene content of 10 percent by volume or more.

The present invention also relates to a gas oil composition comprising a base gas oil mixed with a hydrorefined oil from crude oil at a ratio of 30 to 50 percent by volume : 50 to 70 percent by volume, the base gas oil being produced by contacting a mixed oil of 10 to 90 percent by volume of an animal or vegetable fat and/or a component originating therefrom and 90 to 10 percent by volume of a petroleum base oil with a sulfur content of 15 ppm by mass or less, produced by refining crude oil, with a catalyst comprising a porous inorganic oxide containing two or more elements selected from the group consisting of aluminum, silicon, zirconium, boron, titanium, and magnesium and at least one or more metals selected from the group consisting of the Group 8 metals of the periodic table supported thereon, under the conditions where the hydrogen pressure is from 2 to 13 MPa, the liquid hourly space velocity is from 0.1 to 3.0 h⁻¹, the hydrogen/oil ratio is from 150 to 1500 NL/L, and the reaction temperature is from 150 to 380°C, the gas oil composition having the following properties:
a 90% distillation temperature of 360°C or lower;
a total aromatic content of 15 percent by volume or less;
a cetane index of 45 or greater;
a sulfur content of 5 ppm by mass or less;
an oxygen content of 1 percent by mass or less;
a triglyceride content of 0.01 percent by mass or less;
an acid number of 0.13 mgKOH/g or less;
an increase in acid number after an oxidation stability test of 0.12 mgKOH/g or less; and
a single ring naphthene content of 10 percent by volume or more.

The present invention also relates to a gas oil composition comprising a base gas oil with an isoparaffin/n-paraffin ratio of 0.2 or greater, mixed with a hydrorefined oil from crude oil at a ratio of 30 to 50 percent by volume : 50 to 70 percent by volume, the base gas oil being produced by contacting an animal or vegetable fat and/or a component originating therefrom, with a catalyst comprising a support containing a crystalline molecular sieve and one or more metals selected from the group consisting of the Groups 6A and 8 metals of the periodic table supported thereon, under the conditions where the hydrogen pressure is from 2 to 13 MPa, the liquid hourly space velocity is from 0.1 to 3.0 h⁻¹, the hydrogen/oil ratio is from 250 to 1500 NL/L, and the reaction temperature is from 150 to 380°C, and
the gas oil composition having the following properties:
a 90% distillation temperature of 360°C or lower;
a total aromatic content of 15 percent by volume or less;
a cetane index of 45 or greater;
a sulfur content of 1 ppm by mass or less;
an oxygen content of 1 percent by mass or less;
a triglyceride content of 0.01 percent by mass or less;
an acid number of 0.13 mgKOH/g or less;
an increase in acid number after an oxidation
stability test of 0.12 mgKOH/g or less;
a cold filter plugging point (CFPP) of -5°C or lower;
a pour point (PP) of -10°C or lower; and
a isoparaffin/n-paraffin ratio in the paraffin contained in the composition of 0.80 or greater.

The present invention also relates to a gas oil composition comprising a base gas oil with an isoparaffin/n-paraffin of 0.2 or greater, mixed with a hydrorefined oil from crude oil at a ratio of 30 to 50 percent by volume : 50 to 70 percent by volume, the base gas oil being produced by contacting a mixed oil of 10 to 90 percent by volume of an animal or vegetable fat and/or a component originating therefrom and 90 to 10 percent by volume of a petroleum base oil with a sulfur content of 15 ppm by mass or less produced by refining crude oil, with a catalyst comprising a support containing a crystalline molecular sieve and one or more metals selected from the group consisting of the Groups 6A and 8 metals of the periodic table, supported thereon, under the conditions where the hydrogen pressure is from 2 to 13 MPa, the liquid hourly space velocity is from 0.1 to 3.0 h⁻¹, the hydrogen/oil ratio is from 250 to 1500 NL/L, and the reaction temperature is from 150 to 380°C, the gas oil composition having the following properties:
a 90% distillation temperature of 360°C or lower;
a total aromatic content of 15 percent by volume or less;
a cetane index of 45 or greater;
a sulfur content of 1 ppm by mass or less;
an oxygen content of 1 percent by mass or less;
a triglyceride content of 0.01 percent by mass or less;
an acid number of 0.13 mgKOH/g or less;
an increase in acid number after an oxidation
stability test of 0.12 mgKOH/g or less;
a cold filter plugging point (CFPP) of -5°C or lower;
a pour point (PP) of -10°C or lower; and
a isoparaffin/n-paraffin ratio in the paraffin contained in the composition of 0.80 or greater.

The present invention also relates to a gas oil composition comprising a mixture of any of the aforesaid gas oil compositions and a hydrorefined oil from crude oil.

The present invention also relates to any of the aforesaid gas oil compositions having the following properties:
a flash point of 50°C or higher;
a 90% distillation temperature of 350°C or lower;
a pour point (PP) of -7.5°C or lower;
a cold filter plugging point (CFPP) of -5°C or lower;
a carbon residue of the 10% distillation residue of 0.1 percent by mass or less;
a cetane index of 45 or greater; and
a kinematic viscosity at 30°C of 2.5 mm²/s.

The present invention also relates to any of the aforesaid gas oil compositions having the following properties:
a 10% distillation temperature of from 140°C or higher to 190°C or lower;
a flash point of 45°C or higher;
a 90% distillation temperature of 330°C or lower;
a pour point (PP) of -20°C or lower;
a cold filter plugging point (CFPP) of -12°C or lower;
a carbon residue of the 10% distillation residue of 0.1 percent by mass or less;
a cetane index of 45 or greater; and
a kinematic viscosity at 30°C of 2.0 mm²/s.

According to the present invention, there is provided a gas oil composition comprising the above-described environment friendly base gas oil produced from a triglyceride-containing hydrocarbon, which is an animal or vegetable fat or a component originating therefrom used as the raw material and thus having excellent properties such as life cycle CO₂ emission properties, fuel efficiency, oxidation stability, less affective to parts properties, and low temperature startability, the achievement of which properties has been difficult with the conventional gas oil compositions.

### [Best Mode for Carrying out the Invention]

The present invention will be described below in more detail.

One of the components constituting the gas oil composition of the present invention is an environment friendly base gas oil, which is a hydrocarbon-containing mixed fraction produced by contacting an animal or vegetable fat and a component originating therefrom used as a feedstock with a hydrotreating catalyst containing at least one or more metals selected from the Groups 6A and 8 metals of the periodic table and an inorganic oxide with acidic properties, under hydrogen pressure.

The environment friendly base gas oil used in the present invention is a gas oil fraction or a kerosene fraction, produced by hydrotreating a specific feedstock, or a mixture of these fractions.

The feedstock is necessarily an animal or vegetable fat or a component originating therefrom. Examples of the animal or vegetable fat or the component originating therefrom used herein include natural or artificially made or produced animal or vegetable fats, animal or vegetable fat components, and/or components made or produced from these fats, and components to be added for the purpose of maintaining or improving the quality of these fat products. Examples of raw materials of the animal fats and animal oils include beef tallow, milk fat (butter), lard, mutton tallow, whale oil, fish oil, and liver oil. Examples of raw materials of the vegetable fats and vegetable oils include the seeds and other parts of coconut, palm tree, olive, safflower, rape (rape blossoms), rice bran, sunflower, cotton seed, corn, soy bean, sesame, and flaxseed. Fats or oils other than those produced from these materials may also be used in the present invention. The feedstocks may be of solid or liquid but are preferably produced from vegetable fats or vegetable oils with the objective of easy handling, carbon dioxide absorptivity, and high productivity. Alternatively, waste oils resulting from the use of these animal and vegetable oils for household, industry and food preparation purposes may be used as the feedstock after the residual matters are removed from these oils.

Examples of the typical composition of the fatty acid part of the glyceride compounds contained in these feedstocks include fatty acids, so-called saturated fatty acids having no unsaturated bond in the molecules, such as butyric acid (C₃H₇COOH), caproic acid (C₅H₁₁COOH), caprylic acid (C₇H₁₅COOH), capric acid (C₉H₁₉COOH), lauric acid (C₁₁H₂₃COOH), myristic acid (C₁₃H₂₇COOH), palmitic acid (C₁₅H₃₁COOH), stearic acid (C₁₇H₃₅COOH), and so-called unsaturated fatty acids having one or more unsaturated bonds in the molecules, such as oleic acid (C₁₇H₃₃COOH), linoleic acid (C₁₇H₃₁COOH), linolenic acid (C₁₇H₂₉COOH) and ricinoleic acid (C₁₇H₃₂(OH)COOH). In general, the hydrocarbon parts of these fatty acids contained in substances existing in nature are mostly of straight chain. However, the fatty acid may be any of those having a side chain structure, i.e., isomers as long as the properties defined by the present invention are satisfied. The unsaturated fatty acid may be any of those existence of which are generally recognized in nature as well as those having an unsaturated bond per molecule, the position of which is adjusted through chemical synthesis as long as the properties defined by the present invention are satisfied.

The above-described feedstocks (animal or vegetable fats and components originating therefrom) contain one or more of these fatty acids, which vary depending on the raw materials. For example, coconuts oil contains a relatively large amount of saturated fatty acids such as lauric acid and myristic acid while soy bean oil contains a large amount of unsaturated fatty acids such as oleic acid and linoleic acid.

The feedstock contains a fraction whose boiling point is 250°C or higher, more preferably a fraction whose boiling point is 300°C or higher, and more preferably a fraction whose boiling point is 360°C or higher. If the feedstock contains no fraction whose boiling point is 250°C or higher, the yield of a liquid product would be decreased due to an increase in gas formed during the production, possibly resulting in an increase in life cycle carbon dioxide.

Alternatively, the feedstock may be a mixture of an animal or vegetable fat and a component originating therefrom, with a petroleum hydrocarbon fraction. In this case, the sulfur content of the petroleum base oil produced by refining crude oil (petroleum hydrocarbon fraction) is preferably 10 ppm by mass or less and more preferably from 1 to 5 ppm by mass. When the feedstock is such a mixture, the percentage of the petroleum hydrocarbon fraction is preferably from 10 to 99 percent by volume, more preferably from 30 to 99 percent by volume, and more preferably from 60 to 98 percent by volume, of the total volume of the feedstock. If the percentage is less than the lower limit, there may arise the necessity of facilities for disposal of by-produced water. If the percentage exceeds the upper limit, it is not preferable in view of life cycle carbon dioxide reduction.

Examples of the petroleum hydrocarbon fraction include straight gas oil produced by an atmospheric distillation unit for crude oil; vacuum gas oil produced by treating straight heavy oil or residue from an atmospheric distillation unit, in a vacuum distillation unit; catalytically cracked or hydrotreated gas oil produced by catalytic cracking or hydrotreating vacuum heavy gas oil or desulfurized fuel oil; and hydrorefined or hydrodesulfurized gas oil produced by hydrorefining any of these petroleum hydrocarbons. Preferred are heavy straight gas oil and vacuum gas oil in view of life cycle carbon dioxide reduction.

The oxygen content of the feedstock is preferably from 0.1 to 15 percent by mass, more preferably from 1 to 15 percent by mass, more preferably from 3 to 14 percent by mass, and particularly preferably from 5 to 13 percent by mass, on the basis of the total mass of the feedstock. If the oxygen content is less than 0.1 percent by mass, it tends to be difficult to maintain stable deoxidization and desulfurization activities. If the oxygen content is more than 15 percent by mass, there may arise the necessity of facilities for disposal of by-produced water, and the catalyst to be used is reduced in activity and strength due to excess mutual interaction between water and the catalyst support.

The sulfur content of the feedstock is preferably 15 ppm by mass or less, more preferably 10 ppm by mass or less, and more preferably 5 ppm by mass or less, on the basis of the total mass of the raw oil. If the sulfur content is in excess of 15 ppm by mass, it tends to be difficult to maintain stable deoxidization activity, and the resulting hydrorefined oil tends to be increased in sulfur content and would adversely affect the exhaust post-processing system when used as fuel for a diesel engine. The sulfur content used herein denotes the content by mass of the sulfur components measured in accordance with JIS K 2541 "Crude oil and petroleum products-Determination of sulfur content" or ASTM-D5453.

The conditions of hydrotreating the feedstock are as follows: the hydrogen pressure in the range of 2 to 20 MPa, preferably 2.5 to 17 MPa, and more preferably 3 to 16 MPa, liquid hourly space velocity (LHSV) in the range of 0.1 to 3.0 h⁻¹, preferably 0.2 to 2.0 h⁻¹, and more preferably 0.3 to 1.8 h⁻¹, and hydrogen/oil ratio in the range of 150 to 2000 NL/L, preferably 300 to 1800 NL/L, and more preferably 350 to 1600 NL/L.

Each of the conditions is a factor exerting an influence on the reaction activity. For example, if the hydrogen pressure and hydrogen/oil ratio are less than the lower limits, the reactivity tends to reduce, and the activity tends to reduce rapidly. If the hydrogen pressure and hydrogen/oil ratio exceed the upper limits, an enormous plant investment for a compressor may be required. Lower liquid hourly space velocity tends to be more advantageous for the reactions. However, if the liquid hourly space velocity is lower than the lower limit, an enormous plant investment for construction of a reactor with an extremely large volume may be required. If the liquid hourly space velocity exceeds the upper limit, the reaction tends to proceed insufficiently.

The reactor may be of a fixed bed mode. That is, supply of hydrogen to an oil to be treated (feedstock) may be carried out in the form of counter flow or parallel flow. Alternatively, counter flow and parallel flow may be combined by using a plurality of reactors. The supply mode of the feedstock is generally down flow. Gas-liquid cocurrent flow may be employed. The reactor may be a single reactor or a combination of a plurality of reactors. A single reactor with the interior segmented into a plurality of catalyst beds may also be employed. In the present invention, the distillate hydrorefined in the reactor is fractionated into predetermined fractions through gas-liquid separation and rectification. Thereupon, if moisture is produced in associated with the reaction and the sulfur components are contained in the oil to be treated, hydrogen sulfide may be generated. Therefore, a gas-liquid separation device or any other by-produced gas removal device may be installed between the plurality of reactors or in the product recovering step.

Hydrogen is generally introduced into a first reactor via its inlet, accompanying the oil to be treated, before or after the oil passes through a heating furnace. Alternatively, hydrogen gas may be introduced from the spaces between the catalyst beds or between a plurality of reactors for the purposes of controlling the temperature in the reactors and maintaining the hydrogen pressure over the whole reactors. Hydrogen to be introduced in such a manner is referred to as "quenching hydrogen". The percentage of the quenching hydrogen to the hydrogen introduced, accompanying the oil to be treated is preferably from 10 to 60 percent by volume and more preferably from 15 to 50 percent by volume. The percentage of less than 10 percent by volume would cause a tendency that the reaction at reaction sites in the subsequent stages does not proceed sufficiently. The percentage of more than 60 percent by volume would cause a tendency that the reaction near the inlet of the reactor does not proceed sufficiently.

In the present invention, the feedstock may be treated with a hydrotreating catalyst alone. However, the volume of each of a hydropretreating catalyst and the hydrotreating catalyst may be arbitrarily adjusted in order to obtain a sufficient hydrogenation activity by reducing the oxygen content of the distillate treated with the hydropretreating catalyst. The percentage of the hydropretreating catalyst volume to the total catalyst volume is preferably from 10 to 90 percent by volume and more preferably from 25 to 75 percent by volume. If the percentage is less than the lower limit, the oxygen content of the distillate treated with the hydropretreating catalyst could not be reduced sufficiently. If the percentage is more than the upper limit, the reaction would not proceed sufficiently.

The oxygen content of the distillate treated with the hydropretreating catalyst is preferably 40 percent by mass or less and more preferably 30 percent by mass or less, of that of the feedstock. The oxygen components contained in the distillate before being contacted with the hydrotreating catalyst poison the catalyst active sites thereof. Therefore, if the oxygen content of the distillate after being contacted with the hydropretreating catalyst exceeds 40 percent by mass, an sufficient activity would not be obtained.

If necessary, in addition to the hydropretreating catalyst and hydrotreating catalyst, a guard catalyst, a demetallization catalyst, and an inert filler may be used alone or in combination for the purposes of trapping the scale fraction flowing into the reactor, accompanied with the feedstock and supporting the hydrogenation pretreatment catalyst and the hydrogenation catalyst at portions segmenting the catalyst beds. Furthermore, a catalyst having a hydrogenation activity may be used in the subsequent stages of the hydrotreating catalyst for the purposes of hydrostabilizing decomposition products.

The reaction temperature can be arbitrarily adjusted so as to obtain the intended decomposition rate of the heavy fraction of the feedstock or the intended fraction yield. Furthermore, the reaction temperatures in the hydropretreating catalyst section and the hydrotreating catalyst section can be arbitrarily adjusted, respectively so as to suppress the oxygen content of the distillate treated with the hydropretreating catalyst to a level lower than the aforesaid upper limit. The average temperature in the whole reactors is set to generally from 330 to 480°C, preferably from 350 to 450°C, and more preferably from 360 to 430°C, so as to allow the reaction to proceed sufficiently and produce gasoline, kerosene, and gas oil with predetermined properties. If the reaction temperature is lower than the lower limit, the reaction would not proceed sufficiently. If the reaction temperature exceeds the upper limit, excessive decomposition would proceed and the yield of the liquid product would be reduced.

The hydropretreating catalyst contains at least one metal, preferably two or more metals selected from the Groups 6A and 8 metals of the periodic table. Example of such metals include Co-Mo, Ni-Mo, Ni-Co-MO, and Ni-W. Upon hydropretreatment, these metals are converted to be in the form of sulfides before being used.

The support of the hydropretreating catalyst is a porous inorganic oxide. The support is generally an alumina-containing porous inorganic oxide. Examples of other components constituting the support include silica, titania, zirconia, and boria. The support is preferably a composite oxide containing alumina and at least one or more components selected from the other constituting components. The support may further contain phosphorus in addition to these components. The total content of the components other than alumina is preferably from 1 to 20 percent by mass and more preferably 2 to 15 percent by mass. If the total content is less than 1 percent by mass, the resulting catalyst fails to obtain a sufficient catalytic surface area and thus would be reduced in activity. If the total content is more than 20 percent by mass, the acidic properties of the support is increased, possibly leading to a reduction in activity caused by the formation of coke. When phosphorus is contained as a support constituting component, the content of phosphorus is from 1 to 5 percent by mass and more preferably from 2 to 3.5 percent by mass in terms of oxide.

There is no particular restriction on the raw materials which are precursors of silica, titania, zirconia, and boria. Therefore, a solution containing silicon, titanium, zirconium, or boron is generally used. For silicon, silicic acid, sodium silicate, and silica sol may be used. For titanium, titanium sulfate, titanium tetrachloride, and various alkoxide salts may be used. For zirconium, zirconium sulfate and various alkoxide salts may be used. For boron, boric acid may be used. For phosphorus, phosphoric acid and alkali metal salts thereof may be used.

The raw materials of these support constituting components other than alumina are preferably added at any stage prior to calcination of the support. For example, the raw materials may be added to an aluminum aqueous solution which is then formed into an aluminum oxide gel containing these support constituting components, or may be added to a prepared aluminum oxide gel. Alternatively, the raw materials may be added at a step of kneading a mixture of water or an acid aqueous solution and a commercially available alumina intermediate or boehmite powder. Preferably, these support constituting components are contained in an aluminum oxide gel during the process of preparation thereof. Although the mechanism exhibiting advantageous effects attained by addition of these support constituting components other than alumina has not been elucidated, it is assumed that these components form a complex oxide state together with aluminum. It is thus presumed that this increase the surface area of the support and cause some interaction with the active metals, thereby giving influences to the activity of the catalyst.

The total supported amount of the active metals, for example, W and Mo is preferably from 12 to 35 percent by mass and more preferably from 15 to 30 percent by mass, in terms of oxide, of the catalyst mass. If the amount is less than the lower limit, the catalytic activity would be reduced because the number of active sites is reduced. If the amount is more than the upper limit, the metals fail to disperse effectively, possibly leading to a reduction in catalytic activity. The total supported amount of Co and Ni is preferably from 1.5 to 10 percent by mass and more preferably from 2 to 8 percent by mass, in terms of oxide, of the catalyst mass. If the amount is less than 1.5 percent by mass, a sufficient co-catalytic effect can not be attained, possibly leading to a reduction in catalytic activity. If the amount is more than 10 percent by mass, the metals fail to disperse effectively, possibly leading to a reduction in catalytic activity.

The catalyst used in the present invention, for hydrotreating an animal or vegetable fat and/or a component originating therefrom, contains at least one metal and preferably two or more metals selected from the Groups 6A and 8 metals of the periodic table. Examples of these metals include Co-Mo, Ni-Mo, Ni-Co-MO, and Ni-W. Preferred examples include Ni-Mo, Ni-Co-MO, and Ni-W. Similarly to the hydropretreating catalyst, these metals are converted to be in the form of sulfides before being used.

Employed for the support of the hydrotreating catalyst are inorganic oxides with acidic properties. Specific examples of the support include porous inorganic oxides containing at least one or more element and preferably two or more elements selected from aluminum, silicon, zirconium, boron, titanium, and magnesium. Particularly preferred examples include inorganic oxides containing aluminum and another element (complex oxides of aluminum oxide and another oxide).

Examples of the porous inorganic oxide include silica, alumina, boria, zirconia, titania, magnesia, and zeolite. Preferred examples of the complex oxide containing two or more kinds of these oxides include silica-alumina, titania-alumina, boria-alumina, zirconia-alumina, titania-zirconia-alumina, silica-boria-alumina, silica-zirconia-alumina, silica-titania-alumina, and silica-titania-zirconia-alumina. More preferred examples include silica-alumina, boria-alumina, zirconia-alumina, titania-zirconia-alumina, silica-boria-alumina, silica-zirconia-alumina, and silica-titania-alumina. More preferred examples include silica-alumina and silica-zirconia-alumina. Preferably, these complex oxides contain zeolite. In the case where alumina is contained, alumina can be contained in any percentage to other components on the basis of the support. However, the content of alumina is preferably 96 percent by mass or less and more preferably 90 percent by mass or less of the support mass. If the content is more than 96 percent by mass, the catalyst would fail to exert a desired hydrotreating activity because sufficient acidic properties are not attained.

Examples of components other than silica, forming the crystalline structure of zeolite used for the hydrotreating catalyst include alumina, titania, boria, and gallium. Preferred zeolites include those containing silica and alumina, i.e., alumino-silicate. There have been reported many types of zeolite crystalline structure, such as faujasite, beta, mordenite, and pentasil types. In the present invention, more preferred are faujasite, beta, and pentasil types because zeolites of these types exert a sufficient hydrotreating activity. Particularly preferred are faujasite and beta types. These zeolites may be adjusted in alumina content correspondingly to the stoichiometric ratio of the raw materials upon initiation of the synthesis of the zeolites or may be subjected to a hydrothermal treatment and/or an acid treatment. Among these zeolites, most preferred are ultra-stable Y type zeolites ultra-stabilized by a hydrothermal treatment and/or an acid treatment. It is assumed that the ultra-stable Y type zeolites have a micro porous structure peculiar thereto, so-called micro pores of 20 Å or smaller and also newly formed pores in the range of 20 to 100 Å, which pores provide reaction sites excellent for converting the oxygen components contained in fat components. The volume of the pore with a pore diameter in this range is preferably from 0.03 ml/g or larger and more preferably from 0.04 ml/g or larger. The pore volume used herein is generally determined by mercury intrusion method. The hydrothermal treatment may be carried out under the known conditions. The molar ratio of silica to alumina defined as the physical properties of the ultra-stable Y type is preferably from 10 to 120, more preferably from 15 to 70, and more preferably from 25 to 50. If the molar ratio is greater than 120, the resulting catalyst is reduced in acidic properties and thus would fail to exert a sufficient hydrotreating activity. If the molar ratio is less than 10, the resulting catalyst would be too strong in acidic properties and thus encounter a rapid reduction in activity due to accelerated formation of coke. The content of the zeolite is preferably from 2 to 80 percent by mass and more preferably from 4 to 75 percent by mass, of the support mass. If the content is less than the lower limit, the resulting catalyst would fail to exert a sufficient hydrogenation activity. If the content is more than the upper limit, the resulting catalyst would be too strong in acidic properties and thus accelerate coke formation.

Examples of another preferred catalyst used in the present invention include catalysts comprising a porous inorganic oxide containing two or more elements selected from aluminum, silicon, zirconium, boron, titanium, and magnesium, and one or more metals selected from the Group 8 metals of the periodic table, supported on the oxide.

The support of this catalyst may be a porous inorganic porous oxide containing two or more elements selected from aluminum, silicon, zirconium, boron, titanium, and magnesium. Preferred examples of the inorganic porous oxide include those containing two or more elements selected from aluminum, silicon, zirconium, boron, titanium, and magnesium with the objective of further improving deoxidization and desulfurization activities. More preferred examples include those containing aluminum and other elements (complex oxides of aluminum oxide and another oxide).

There is no particular restriction on the method of introducing support-constituting elements such as silicon, zirconium, boron, titanium and magnesium, into the support. Therefore, a solution containing these elements may be used as the raw material. For silicon, silicic acid, sodium silicate, and silica sol may be used. For boron, boric acid may be used. For phosphorus, phosphoric acid and alkali metal salts thereof may be used. For titanium, titanium sulfate, titanium tetrachloride, and various alkoxide salts may be used. For zirconium, zirconium sulfate and various alkoxide salts may be used.

The raw materials of these support constituting components other than aluminum are preferably added at any stage prior to calcination of the support. For example, the raw materials may be added to an aluminum aqueous solution which is then formed into an aluminum oxide gel containing these support constituting components, or may be added to a prepared aluminum oxide gel. Alternatively, the raw materials may be added at a step of kneading a mixture of water or an acid aqueous solution and a commercially available aluminum oxide intermediate or boehmite powder. Preferably, these support constituting components are contained in an aluminum oxide gel during the process of preparation thereof. Although the mechanism exhibiting advantageous effects attained by addition of these support constituting components other than aluminum oxide has not been elucidated, it is assumed that these components form a complex oxide state together with aluminum. It is thus presumed that this increase the surface area of the support and cause some interaction with the active metals, thereby giving influences to the activity of the catalyst.

The above-described porous inorganic oxide supports one or more metals selected from the Group 8 metals of the periodic table. Among these metals, preferred are one or more metals selected from Pd, Pt, Rh, Ir, Au, and Ni. More preferably, these metals are used in combination. Preferred combinations are Pd-Pt, Pd-Ir, Pd-Rh, Pd-Au, Pd-Ni, Pt-Rh, Pt-Ir, Pt-Au, Pt-Ni, Rh-Ir, Rh-Au, Rh-Ni, Ir-Au, Ir-Ni, Au-Ni, Pd-Pt-Rh, Pd-Pt-Ir, and Pt-Pd-Ni. Among these combinations, more preferred are Pd-Pt, Pd-Ni, Pt-Ni, Pd-Ir, Pt-Rh, Pt-Ir, Rh-Ir, Pd-Pt-Rh, Pd-Pt-Ni, and Pd-Pt-Ir. Further more preferred are Pd-Pt, Pd-Ni, Pt-Ni, Pd-Ir, Pt-Ir, Pd-Pt-Ni, and Pd-Pt-Ir. These metals are used after being reduced upon hydrorefining.

Examples of the other preferred catalyst used in the present invention include those each comprising a support containing a crystalline molecular sieve and one or more metals selected from the Groups 6A and 8 metals of the periodic table, supported on the support.

Preferably, the molecular sieve contains at least silicon so as to provide the catalyst with sufficient hydrodeoxidization and hydroisomerization activities. Preferably, in addition to silicon, the support contains constituting elements such as aluminum, zirconium, boron, titanium, gallium, zinc, and phosphorus. More preferably, the support contains aluminum, zirconium, boron, titanium, and phosphorus. The catalyst containing these elements can facilitate hydrodeoxidization reaction and skeletal isomerization reaction of hydrocarbons simultaneously and achieve the improved low temperature startability of the resulting produced oil.

With regard to the elements constituting the aforesaid molecular sieve, other than oxygen, the ratio of {the number of silicon atom}/{the number of atom of elements other than silicon} is preferably 3 or more, preferably 10 or more, and more preferably 30 or more. If the ratio is less than 3, decomposition of paraffin is accelerated, possibly leading to a reduction in activity due to coking.

The pore diameter of the crystalline molecular sieve is 0.8 nm or smaller, and more preferably 0.65 nm or smaller. If the diameter is greater than 0.8 nm, decomposition of paraffin may occur. There is no particular restriction on the crystal structure of the crystalline molecular sieve. Examples of the crystal structure include FAU, AEL, MFI, MMW, TON, MTW, *BEA, and MOR defined by International Zeolite Association.

There is no particular restriction on the method of synthesizing the crystalline molecular sieve. As generally known, the molecular sieve may be produced by hydrothermal crystallization method using raw materials of constituting components and an amine compound as a structural indicator. Examples of the raw materials include sodium silicate, colloidal silica, and alkoxide silicate for a silicon-containing compound, and aluminum oxide and sodium aluminate for aluminum. Examples of the structural indicator include tetrapropyl ammonium salt.

If necessary, the crystalline molecular sieve may be subjected to hydrothermal treatment by steam, immersion treatment by an alkali or acid aqueous solution, ion-exchange, surface treatment by basic or acid gas such as gaseous chlorine or ammonia, alone or in combination so as to adjust its physical properties.

A constituent other than the molecular sieve, of the catalyst is an inorganic oxide containing aluminum, silicon, zirconium, boron, titanium, and magnesium. The inorganic oxide preferably containing two or more selected from aluminum, silicon, zirconium, boron, titanium, and magnesium because they can be used as a bond for forming the crystalline molecular sieve and can act as active components for facilitating hydrodeoxidization and hydroisomerization. The content of the molecular sieve in the whole catalyst is preferably from 2 to 90 percent by mass, more preferably from 5 to 85 percent by mass, and more preferably from 10 to 80 percent by mass. If the content is less than 2 percent by mass, the resulting catalyst is not sufficient in hydrodeoxidization and hydroisomerization activities. If the content is more than 90 percent by mass, the catalyst can not be formed easily, possibly leading to the occurrence of some troubles in industrial production.

There is no particular restriction on the method of introducing the constituents other than the crystalline molecular sieve, such as silicon, zirconium, boron, titanium, and magnesium, except for aluminum, into the support of the catalyst. Therefore, a solution containing these elements may be used as the raw material. For silicon, silicic acid, sodium silicate, and silica sol may be used. For boron, boric acid may be used. For phosphorus, phosphoric acid and alkali metal salts thereof may be used. For titanium, titanium sulfate, titanium tetrachloride, and various alkoxide salts may be used. For zirconium, zirconium sulfate and various alkoxide salts may be used.

The raw materials of the support constituting elements, other than aluminum oxide are preferably added at any stage prior to calcination of the support. For example, the raw materials may be added to an aluminum aqueous solution which is then formed into an aluminum oxide gel containing these support constituting components, or may be added to a prepared aluminum oxide gel. Alternatively, the raw materials may be added at a step of kneading a mixture of water or an acid aqueous solution and a commercially available aluminum oxide intermediate or boehmite powder. Preferably, these support-constituting components are contained in an aluminum oxide gel during the process of preparation thereof. Although the mechanism exhibiting advantageous effects attained by addition of these support constituting components other than aluminum oxide has not been elucidated, it is assumed that these components form a complex oxide state together with aluminum. It is thus presumed that this increase the surface area of the support and cause some interaction with the active metals, thereby giving influences to the activity of the catalyst.

The support containing the crystalline molecular sieve supports one or more metals selected from the Group 8 metals of the periodic table. Among these metals, preferred are one or more metals selected from Pd, Pt, Rh, Ir, Au, and Ni. More preferably, these metals are used in combination. Preferred combinations are Pd-Pt, Pd-Ir, Pd-Rh, Pd-Au, Pd-Ni, Pt-Rh, Pt-Ir, Pt-Au, Pt-Ni, Rh-Ir, Rh-Au, Rh-Ni, Ir-Au, Ir-Ni, Au-Ni, Pd-Pt-Rh, Pd-Pt-Ir, and Pt-Pd-Ni. Among these combinations, more preferred are Pd-Pt, Pd-Ni, Pt-Ni, Pd-Ir, Pt-Rh, Pt-Ir, Rh-Ir, Pd-Pt-Rh, Pd-Pt-Ni, and Pd-Pt-Ir. Further more preferred are Pd-Pt, Pd-Ni, Pt-Ni, Pd-Ir, Pt-Ir, Pd-Pt-Ni, and Pd-Pt-Ir.

Preferably, the active metals contained in the catalyst are reduced before the catalyst is supplied to the reaction. There is no particular restriction on the reduction conditions. The active metals are reduced by treating at a temperature of 200 to 400°C and preferably 240 to 380°C under a hydrogen stream. If the reduction temperature is lower than 200°C, the active metals are not reduced sufficiently, and thus the catalyst may not exert hydrodeoxidization and hydroisomerization activities. If the reduction temperature is higher than 400°C, agglomeration of the active metals proceeds, and thus similarly the catalyst may not exert hydrodeoxidization and hydroisomerization activities.

In the present invention, the total content of the active metals in the catalyst is from 0.1 to 2 percent by mass, preferably from 0.2 to 1.5 percent by mass, and more preferably from 0.5 to 1.3 percent by mass, in terms of metal, on the basis of the catalyst mass. If the total content is less than 0.1 percent, the active sites are reduced, leading to a tendency that a sufficient activity may not be attained. If the total content is more than 2 percent by mass, the metals are not dispersed effectively, leading to a tendency that a sufficient activity may not be attained.

There is no particular restriction on the method of supporting the active metals on any of the hydropretreating catalysts and hydrotreating catalysts. Therefore, any conventional method for producing an usual desulfurization catalyst may be employed. A method is preferably employed in which a support is impregnated with a solution containing salts of the active metals. Alternatively, an equilibrium adsorption method, pore-filling method, or incipient-wetness method is also preferably used. For example, the pore-filling method is a method in which the pore volume of a support is measured in advance, and then the support is impregnated with the same volume of a metal salt solution. There is no particular restriction on the method of impregnating the support with a solution. Therefore, any suitable method may be used depending on the amount of the metals to be supported and physical properties of the support.

Furthermore, the present invention can also produce a gas oil composition meeting the predetermined properties by mixing the above-described environment friendly base gas oil with a hydrorefined oil produced by refining crude oil.

Examples of the hydrorefined oil produced by refining crude oil include hydrorefined gas oils and hydrodesulfurized gas oils produced by hydrorefining straight gas oil obtained from an atmospheric distillation unit for crude oil, vacuum gas oil produced by treating straight heavy oil or residue obtained from an atmospheric distillation unit, in a vacuum distillation unit, and catalytic-cracked or hydrotreated oil produced by catalytic-cracking or hydrotreating vacuum heavy gas oil or desulfurized fuel oil.

These hydrorefined oils may contain a plurality of base gas oil fractions and base kerosene fractions to an extent that the predetermined conditions are satisfied. Alternatively, there may be used synthesized gas oils synthesized using natural gas, asphalt, coal, and biomass as raw materials.

Hydrorefining for producing the hydrorefined oil may be carried out using a common hydrodesulfurization unit in petroleum refinery. Generally, a gas oil fraction is hydrorefined under the conditions of a reaction temperature of 300 to 380°C, a hydrogen pressure of 3 to 8 MPa, an LHSV of 0.3 to 2 h⁻¹, and a hydrogen/oil ratio of 100 to 500 NL/L.

The catalyst used for hydrorefining may be any of the conventional hydrodesulfurization catalysts. Preferably, the active metals of the catalyst are the Groups 6A and 8 metals of the periodic table. Examples of these metals include Co-Mo, Ni-Mo, Co-W, and Ni-W. The support may be an porous inorganic oxide containing alumina as the main component. These conditions and the catalyst are not particularly restricted as long as the properties of the feedstock are satisfied.

Alternatively, the hydrorefined oil may be those produced by hydrogenating the above-described feedstock in the presence of a hydrogenation catalyst. The hydrogenation is generally carried out under the conditions of a reaction temperature of 170 to 320°C, a hydrogen pressure of 2 to 10 MPa, an LHSV of 0.1 to 2 h⁻¹, and a hydrogen/oil ratio of 100 to 800 NL/L, preferably a reaction temperature of 175 to 300°C, a hydrogen pressure of 2.5 to 8 MPa, an LHSV of 0.2 to 1.5 h⁻¹, and a hydrogen/oil ratio of 150 to 600 NL/l, and more preferably a reaction temperature of 190 to 280°C, a hydrogen pressure of 3 to 7 MPa, an LHSV of 0.3 to 1.2 h⁻¹, and a hydrogen/oil ratio of 150 to 500 NL/L. A lower reaction temperature is advantageous for hydrogenation but is not preferable for desulfurization. Lower the hydrogen pressure and hydrogen/oil ratio, more desulfurization and hydrogenation are accelerated. However, their economical optimum points exist. A lower LHSV is advantageous for the reaction. However, a too low LHSV is disadvantageous because an enormous plant investment for construction of a reactor with a large volume is required.

The hydrorefining unit for hydrorefining the feedstock used in the present invention may be of any structure, and a single or a plurality of reactors in combination may be used. Hydrogen may be additionally introduced into the spaces between a plurality of reactors. The hydrorefining unit may be provided with a gas-liquid separation system or a hydrogen sulfide removal system.

The reaction system of the hydrorefining unit is preferably a fixed bed system. Hydrogen may be supplied in counterflow or parallel flow with respect to the feedstock. When the hydrorefining unit has a plurality of reactors, counterflow and parallel flow may be combined. The supply mode of the feedstock is generally down flow and is preferably a gas-liquid cocurrent flow mode. Hydrogen gas may be supplied as quencher into a middle portion of a reactor for the purposes of removing the reaction heat or increasing the hydrogen partial pressure.

The catalyst used for hydrorefining comprises a hydrogenation active metal supported on a porous support. The porous support may be an inorganic oxide. Examples of the inorganic oxide include alumina, titania, zirconia, boria, silica, and zeolite. In the present invention, the support is preferably composed of alumina and at least one selected from titania, zirconia, boria, silica, and zeolite. There is no particular restriction on the method of producing the support. Therefore, there may be employed any method using raw materials in the form of sols or salt compounds each containing any of the elements. Alternatively, the support may be prepared by forming a complex oxide or hydroxide such as silica alumina, silica zirconia, alumina titania, silica titania, and alumina boria and then adding at any step alumina in the form of alumina gel, a hydroxide, or a suitable solution. Alumina can be contained in any percentage to other oxides on the basis of the porous support. However, the content of alumina is preferably 90 percent by mass or less, more preferably 60 percent by mass or less, and more preferably 40 percent by mass or less, of the support mass.

Zeolite is a crystalline alumino silicate. Examples of the crystalline structure include faujasite, pentasil, and mordenite. These zeolites may be those ultra-stabilized by a specific hydrothermal treatment and/or acid treatment or those whose alumina content is adjusted. Preferred zeolites are those of faujasite and mordenite types, and particularly preferred zeolites are those of Y and beta types. The zeolites of Y type are preferably ultra-stabilized. The ultra-stabilized zeolite have a micro porous structure peculiar thereto, so-called micro pores of 20 Å or smaller and also newly formed pores in the range of 20 to 100 Å. The hydrothermal treatment may be carried out under known conditions.

The active metal of the catalyst used for hydrorefining is at least one metal selected from the Group 8 metals of the periodic table, preferably at least one metal selected from Ru, Rd, Ir, Pd, and Pt, and more preferably Pd and/or Pt. These metals may be used in combination such as Pt-Pd, Pt-Rh, Pt-Ru, Ir-Pd, Ir-Rh, Ir-Ru, Pt-Pd-Rh, Pt-Rh-Ru, Ir-Pd-Rh, and Ir-Rh-Ru. The metal sources of these metals may be inorganic salts or complex salt compounds which have been conventionally used. The method of supporting the metal may be any of methods such as immersion and ion exchange which are used for a hydrogenation catalyst. When a plurality of metals are supported, they may be supported using a mixed solution thereof at the same time. Alternatively, a plurality of metals may be supported using solutions each containing any of the metals one after another. These metal solutions may be aqueous solutions or those produced using an organic solvent.

The metal(s) may be supported on the porous support after completion of all the steps for preparing the porous support. Alternatively, the metal(s) may be supported on the porous support in the form of a suitable oxide, complex oxide or zeolite produced at the intermediate stage of the preparation of the porous support and then may proceed to gel-preparation or be subjected to heat-concentration and kneading.

There is no particular restriction on the amount of the active metal(s) to be supported. However, the amount is from 0.1 to 10 percent by mass, preferably from 0.15 to 5 percent by mass, and more preferably from 0.2 to 3 percent by mass on the basis of the catalyst mass.

The catalyst is preferably used after it is subjected to a pre-reduction treatment under a hydrogen stream.

In general, the active metal (s) are subjected to heat at 200°C or higher in accordance with the predetermined procedures, circulating gas containing hydrogen and then reduced, thereby exerting catalytic activity.

Other than hydrorefined gas oil fractions, hydrorefined kerosene fractions may be used in the present invention. Such kerosene fractions may be those produced by hydrorefining predetermined feedstocks. Mainly used as such feedstocks is straight kerosene produced by vacuum-distillation of crude oil. However, there may be used hydrotreated kerosene co-produced with hydrotreated gas oil and hydrorefined kerosene produced by hydrotreating the aforesaid kerosene fractions. Alternatively, there may be used synthesized kerosene synthesized from natural gas, asphalt, coal, and biomass.

The hydrorefined kerosene fraction used in the present invention may be those produced by hydrotreating (desulfurization and refining) the above-described feedstocks oils in the presence of a hydrogenation catalyst.

The hydrogenation is generally carried out under the conditions of a reaction temperature of 220 to 350°C, a hydrogen pressure of 1 to 6 MPa, an LHSV of 0.1 to 10 h⁻¹, and a hydrogen/oil ratio of 10 to 300 NL/L, preferably a reaction temperature of 250 to 340°C, a hydrogen pressure of 2 to 5 MPa, an LHSV of 1 to 10 h⁻¹, and a hydrogen/oil ratio of 30 to 200 NL/l, and more preferably a reaction temperature of 270 to 330°C, a hydrogen pressure of 2 to 4 MPa, an LHSV of 2 to 10 h⁻¹, and a hydrogen/oil ratio of 50 to 200 NL/L. A lower reaction temperature is advantageous for hydrogenation but is not preferable for desulfurization. Higher the hydrogen pressure and hydrogen/oil ratio, more desulfurization and hydrogenation are accelerated. However, their economical optimum points exist. A lower LHSV is advantageous for the reaction. However, a too low LHSV is disadvantageous because an enormous plant investment for construction of a reactor with an extremely large volume is required.

The hydrotreating unit for hydrotreating the feedstock used in the present invention may be of any structure, and a single or a plurality of reactors in combination may be used. Hydrogen may be additionally introduced into the spaces between a plurality of reactors. The hydrotreating unit may be provided with a gas-liquid separation system or a hydrogen sulfide removal system.

The reaction system of the hydrotreating unit is preferably a fixed bed system. Hydrogen may be supplied in counterflow or parallel flow with respect to the feedstock. When the hydrotreating unit has a plurality of reactors, counterflow and parallel flow may be combined. The supply mode of the feedstock is generally down flow and is preferably a gas-liquid cocurrent flow mode. Hydrogen gas may be supplied as quencher into a middle portion of a reactor for the purposes of removing the reaction heat or increasing the hydrogen partial pressure.

The catalyst used for hydrotreating comprises a hydrogenation active metal supported on a porous support. The porous support may be a porous inorganic oxide composed of mainly alumina. Examples of the inorganic oxide include alumina, titania, zirconia, boria, silica, and zeolite. In the present invention, the support is preferably composed of alumina and at least one selected from titania, zirconia, boria, silica, and zeolite. There is no particular restriction on the method of producing the support. Therefore, there may be employed any method using raw materials in the form of sols or salt compounds each containing any of the elements. Alternatively, the support may be prepared by forming a complex oxide or hydroxide such as silica alumina, silica zirconia, alumina titania, silica titania, and alumina boria and then adding at any step alumina in the form of alumina gel, a hydroxide, or a suitable solution. Alumina can be contained in any percentage to other oxides on the basis of the porous support. However, the content of alumina is preferably 90 percent by mass or less, more preferably 60 percent by mass or less, and more preferably 40 percent by mass or less, of the support mass. These conditions and the catalyst are not particularly restricted as long as the properties of the feedstock are satisfied.

Zeolite is a crystalline alumino silicate. Examples of the crystalline structure include faujasite, pentasil, and mordenite. These zeolites may be those ultra-stabilized by a specific hydrothermal treatment and/or acid treatment or those whose alumina content is adjusted. Preferred zeolites are those of faujasite and mordenite types, and particularly preferred zeolites are those of Y and beta types. The zeolites of Y type are preferably ultra-stabilized. The ultra-stabilized zeolite have a micro porous structure peculiar thereto, with so-called micro pores of 20 Å or smaller and also newly formed pores in the range of 20 to 100 Å. The hydrothermal treatment may be carried out under known conditions.

The active metal of the catalyst used for hydrotreating is at least one metal selected from the Group 6A metals of the periodic table, preferably at least one metal selected from Mo and W. The active metal may be a combination of the Group 6A metals and Group 8 metals, specifically a combination of Mo or W and Co or Ni, such as Co-Mo, Co-W, Ni-Mo, Ni-W, Co-Ni-Mo, and Co-Ni-W. The metal sources of these metals may be inorganic salts or complex salt compounds which have been conventionally used. The method of supporting the metal may be any of methods such as immersion and ion exchange which are used for a hydrogenation catalyst. When a plurality of metals are supported, they may be supported using a mixed solution thereof at the same time. Alternatively, a plurality of metals may be supported using solutions each containing any of the metals one after another. These metal solutions may be aqueous solutions or those produced using an organic solvent.

The metal(s) may be supported on the porous support after completion of all the steps for preparing the support. Alternatively, the metal(s) may be supported on the porous support in the form of a suitable oxide, complex oxide or zeolite produced at the intermediate stage of the preparation of the porous support and then may be subjected to gel-preparation or heat-concentration and kneading.

There is no particular restriction on the amount of the active metal(s) to be supported. However, the amount is from 0.1 to 10 percent by mass, preferably from 0.15 to 5 percent by mass, and more preferably from 0.2 to 3 percent by mass on the basis of the catalyst mass.

The catalyst is preferably used after it is subjected to a pre-reduction treatment under a hydrogen stream.

In general, the active metal(s) are subjected to heat at 200°C or higher in accordance with the predetermined procedures, circulating a gas containing hydrogen and then reduced, thereby exerting catalytic activity.

In the present invention, the feedstock is hydrotreated using a catalyst comprising at least one or more metals selected from the Groups 6A and 8 metals of the periodic table, supported on a support containing a crystalline molecular sieve. In this case, preferably the hydrotreating comprises a first hydrogenation step wherein 70 percent by mass or more of the oxygen content of the oil to be treated (feedstock) is removed and a second hydrogenation step wherein 95 percent by mass or more of the remaining oxygen content is removed, and the ratio of isoparaffin/n-paraffin in the paraffin components in the refined oil is made 0.2 or more. If the removal rate of the oxygen content in the first step is less than 70 percent by mass, hydrodeoxidization and hydroisomerization reactions in the second hydrogenation step may not proceed sufficiently.

In the first hydrogenation step, it is preferable to use a catalyst comprising at least one or more active metals selected from the Groups 6A and 8 metals of the periodic table, supported on a porous inorganic oxide composed of two or more elements selected from aluminum, silicon, zirconium, boron, titanium, and magnesium. Preferred active metals are one or more metals selected from Pd, Pt, Rh, Ir, Au, Ni, and Mo.

In the second hydrogenation step, a catalyst may be used which comprises one or more metals selected from the Group 8 metals of the periodic table, supported on a support containing a crystalline molecular sieve.

One or more types of catalysts may be used in the second hydrogenation step. For the purposes of improving the stability of the refined oil, a catalyst having hydrogenation activity may be charged in any of the stages subsequent to the second hydrogenation step.

The gas oil composition of the present invention comprises a base gas oil produced by contacting an animal or vegetable fat and/or a component originating therefrom or a mixed oil of such a fat and/or such a component and a petroleum base produced by refining crude oil, with a hydrorefining catalyst containing at least one or more metals selected from the group consisting of the Groups 6A and 8 metals of the periodic table and an inorganic oxide with acidic properties under hydrogen pressure, the sulfur and oxygen contents of the gas oil composition being 5 ppm by mass or less and 1 percent by mass or less, respectively.

Alternatively, the gas oil composition of the present invention comprises a base gas oil mixed with a hydrorefined oil from crude oil at a ratio of 30 to 50 percent by volume : 50 to 70 percent by volume, the base oil being produced by contacting an animal or vegetable fat and/or a component originating therefrom or a mixed oil of 10 to 90 percent by volume of an animal or vegetable fat and/or a component originating therefrom and 90 to 10 percent by volume of a petroleum base oil with a sulfur content of 15 ppm by mass or less, produced by refining crude oil, with a catalyst comprising a porous inorganic oxide containing two or more elements selected from aluminum, silicon, zirconium, boron, titanium, and magnesium and at least one or more metals selected from the Group 8 metals of the periodic table supported thereon, under the conditions where the hydrogen pressure is from 2 to 13 MPa, the liquid hourly space velocity is from 0.1 to 3.0 h⁻¹, the hydrogen/oil ratio is from 150 to 1500 NL/L, and the reaction temperature is from 150 to 380°C, the gas oil composition having the following properties:
a 90% distillation temperature of 360°C or lower;
a total aromatic content of 15 percent by volume or less;
a cetane index of 45 or greater;
a sulfur content of 5 ppm by mass or less;
an oxygen content of 1 percent by mass or less;
a triglyceride content of 0.01 percent by mass or less;
an acid number of 0.13 mgKOH/g or less;
an increase in acid number after an oxidation
stability test of 0.12 mgKOH/g or less; and
a single ring naphthene content of 10 percent by volume or more.

Further alternatively, the gas oil composition of the present invention comprises a base gas oil with an isoparaffin/n-paraffin ratio of 0.2 or greater mixed with a hydrorefined oil from crude oil at a ratio of 30 to 50 percent by volume : 50 to 70 percent by volume, the base gas oil being produced by contacting an animal or vegetable fat and/or a component originating therefrom or a mixed oil of 10 to 90 percent by volume of an animal or vegetable fat and/or a component originating therefrom and 90 to 10 percent by volume of a petroleum base oil with a sulfur content of 15 ppm by mass or less, produced by refining crude oil, with a catalyst comprising a support containing a crystalline molecular sieve and one or more metals selected from the Groups 6A and 8 metals of the periodic table supported thereon, under the conditions where the hydrogen pressure is from 2 to 13 MPa, the liquid hourly space velocity is from 0.1 to 3.0 h⁻¹, the hydrogen/oil ratio is from 250 to 1500 NL/L, and the reaction temperature is from 150 to 380°C, the gas oil composition having the following properties:
a 90% distillation temperature of 360°C or lower;
a total aromatic content of 15 percent by volume or less;
a cetane index of 45 or greater;
a sulfur content of 5 ppm by mass or less;
an oxygen content of 1 percent by mass or less;
a triglyceride content of 0.01 percent by mass or less;
an acid number of 0.13 mgKOH/g or less;
an increase in acid number after an oxidation
stability test of 0.12 mgKOH/g or less;
a cold filter plugging point (CFPP) of -5°C or lower;
a pour point (PP) of -10°C or lower; and
a isoparaffin/n-paraffin ratio in the paraffin contained in the composition of 0.80 or greater.

The aforesaid gas oils of the present invention are those satisfying the JIS No. 2 gas oil standard or those having a 10% distillation temperature of 140°C or higher and 190°C or lower as distillation characteristics and satisfying the JIS No. 3 gas oil standard.

The JIS No. 2 gas oil standard is a standard satisfying the requirements for "Type No. 2" defined in JIS K 2204 "Gas Oil", specifically a flash point of 50°C or higher, a 90% distillation temperature of 350°C or lower, a pour point of -7.5°C or lower, a cold filter plugging point (CFPP) of -5°C or lower, a carbon residue of the 10% distillation residue of 0.1 percent by mass or less, a cetane index of 45 or greater, and a kinematic viscosity at 30°C of 2.5 mm²/s or greater. The gas oil composition satisfying the JIS No. 2 gas oil standard is preferably used in accordance with "Guidelines for Use of Gas Oil" described in JIS K 2204-1996 Description (Kaisetsu).

The JIS No. 3 gas oil standard is a standard satisfying the requirements for "Type No. 3" defined in JIS K 2204 "Gas Oil", specifically a flash point of 45°C or higher, a 90% distillation temperature of 330°C or lower, a pour point of -20°C or lower, a cold filter plugging point (CFPP) of -12°C or lower, a carbon residue of the 10% distillation residue of 0.1 percent by mass or less, a cetane index of 45 or greater, and a kinematic viscosity at 30°C of 2.0 mm²/s or greater. The gas oil composition satisfying the JIS No. 3 gas oil standard is preferably used in accordance with "Guidelines for Use of Gas Oil" described in JIS K 2204-1996 Description (Kaisetsu).

With regard to the definition of the sulfur content, the definition of the present invention is used as a concept superior to the JIS Standard.

The sulfur content of the gas oil compositions of the present invention is necessarily 5 ppm by mass or less, preferably 4 ppm by mass or less, more preferably 3 ppm by mass or less, more preferably 2 ppm by mass or less, and more preferably 1 ppm by mass or less with the objective of reducing poisonous substances exhausted from an engine and improving exhaust post-processing system performances. The sulfur content used herein denotes the mass content of sulfur components on the basis of the total mass of a gas oil composition measured in accordance with JIS K 2541 "Crude oil and petroleum products-Determination of sulfur content".

The oxygen content of the gas oil compositions of the present invention is necessarily 1 ppm by mass or less, preferably 0.8 ppm by mass or less, more preferably 0.6 ppm by mass or less, more preferably 0.4 ppm by mass or less, and more preferably 0.2 ppm by mass or less with the objective of improving oxidation stability. The oxygen content can be measured with a conventional elemental analysis device. For example, the oxygen content is measured by converting a sample on platinum carbon to CO or further to CO₂ and measuring the amount thereof using a thermal conductivity detector.

When the gas oil composition of the present invention is a gas oil composition satisfying the JIS No. 2 gas oil standard, the flash point is necessarily 50°C or higher. If the flash point is lower than 50°C, the composition can not be handled as the JIS No. 2 gas oil for safety reasons. For the same reasons, the flash point is preferably 54°C or higher and more preferably 58°C or higher. When the gas oil composition of the present invention is a gas oil composition satisfying the JIS No. 3 gas oil standard, the flash point is necessarily 45°C or higher. If the flash point is lower than 45°C, the composition can not be handled as the JIS No. 3 gas oil for safety reasons. For the same reasons, the flash point is preferably 49°C or higher and more preferably 53°C or higher. The flash point used herein denotes the value measured in accordance with JIS K 2265 "Crude oil and petroleum products-Determination of flash point".

The glyceride content of the gas oil compositions of the present invention is preferably 0.01 percent by mass or less, more preferably 0.008 percent by mass or less, and more preferably 0.005 percent by mass or less in view of adverse affects to parts. The glyceride content used herein denotes the value measured in accordance with EN14105.

The cetane index of the gas oil compositions of the present invention is preferably 45 or greater. If the cetane index is lower than 45, it is likely that the concentrations of PM, aldehydes, and NOx would be increased. For the same reasons, the cetane index is preferably 48 or greater and most preferably 51 or greater.

The cetane index used herein denotes the value calculated in accordance with "8.4 cetane index calculation method using variables equation" prescribed in JIS K 2280 "Petroleum products-Fuels-Determination of octane number, cetane number and calculation of cetane index". The cetane index defined by the JIS standards is generally applied to gas oil containing no cetane number improver. However, in the present invention, "8.4 cetane index calculation method using variables equation" is applied to a gas oil containing a cetane number improver, and the value obtained thereby is also defined as cetane index.

The cetane number of the gas oil compositions of the present invention is preferably 52 or greater, more preferably 54 or greater, and more preferably 55 or greater. If the cetane number is lower than 52, it is likely that the concentrations of PM, aldehydes, and NOx would be increased. With the objective of reducing black smoke in exhaust gas, the cetane number is preferably 90 or lower, more preferably 88 or lower, and more preferably 85 or lower. The gas oil compositions of the present invention can be increased in cetane number by adding thereto an adequate amount of a cetane number improver, if necessary. The cetane number used herein denotes the cetane number measured in accordance with "7. Cetane number test method" prescribed in JIS K 2280 "Petroleum products-Fuels-Determination of octane number, cetane number and calculation of cetane index".

When the gas oil composition of the present invention is a gas oil composition satisfying the JIS No. 2 gas oil standard, the density at 15°C is preferably 750 kg/m³ or higher, more preferably 760 kg/cm³ or higher, and more preferably 770 kg/cm³ or higher with the objective of maintaining the calorific value. The density is preferably 850 kg/cm³ or lower, more preferably 845 kg/cm³ or lower, and more preferably 840 kg/cm³ or lower with the objective of reducing Nox and PM emissions. When the gas oil composition of the present invention is a gas oil composition satisfying the JIS No. 3 gas oil standard, the density at 15°C is preferably 740 kg/m³ or higher, more preferably 745 kg/cm³ or higher, and more preferably 750 kg/cm³ or higher with the objective of maintaining the calorific value. The density is preferably 850 kg/cm³ or lower, more preferably 845 kg/cm³ or lower, and more preferably 840 kg/cm³ or lower with the objective of reducing NOx and PM emissions. The density used herein denotes the density measured in accordance with JIS K 2249 "Crude petroleum and petroleum products-Determination of density and petroleum measurement tables based on a reference temperature (15°C).

Desirously, the gas oil composition of the present invention has such a lubricity performance that the HFRR wear scar diameter (WS1.4) is preferably 410 µm or smaller and more preferably 400 µm or smaller. If the HFRR wear scar diameter (WS1.4) is larger than 410µm, in particular a diesel engine equipped with a distribution type injection pump encounters an increase in driving torque and an increase in wear on each part of the pump while the engine is driven, possibly leading not only to degradations of the exhaust gas properties and the particulate matter removal performance but also to the breakdown of the engine itself. Also in an electronically controlled fuel injection pump, wear on the sliding parts would occur.

The HFRR wear scar diameter (WS1.4) used herein denotes the value measured in accordance with JPI-5S-50-98 "Gas oil -Testing Method for Lubricity" prescribed in JPI Standard and Manuals Testing Method for Petroleum Products published by Japan Petroleum Inst.

There is no particular restriction on the aromatic content of the gas oil compositions of the present invention. However, the aromatic content is preferably 20 percent by volume or less, more preferably 15 percent by volume or less, and more preferably 13 percent by volume or less with the objective of enhancing the environment load reducing effects and reducing NOx and PM. The aromatic content used herein denotes the volume percentage (volume %) of the aromatic component content measured in accordance with JPI-5S-49-97 "Petroleum Products -Determination of Hydrocarbon Types-High Performance Liquid Chromatography" prescribed in JPI Standard and Manuals Testing Method for Petroleum Products published by Japan Petroleum Inst.

The single ring naphthene content of the gas oil compositions of the present invention is preferably 10 percent by volume or more, more preferably 15 percent by volume or more, and more preferably 20 percent by volume or more in view of fuel efficiency and exhaust gas emissions. The single ring naphthene content can be derived using GC-TOFMS. In GC-TOFMS, a sample is subjected to gas chromatography to separate its constituents, each of which is then ionized. The ions are then mass-separated by making use of the fact that the flight speed differs according to the ion mass when a given acceleration voltage is applied to ions, and a mass spectrum is obtained according to differences in arrival time at the ion detector. The ionization method in GC-TOFMS is preferably FI ionization method because the formation of fragmented ions is suppressed and the measuring accuracy can be improved. The measuring devices and conditions used in the present invention are as follows:
(GC section)
Device: HP6890 Series GC System & Injector manufacture by HEWLETT PACKARD DEVLOPMENT COMPANY, L.P.
Column: A glient HP-5 (30 m x 0.32 mmΦ, 0.25 µm-film)
Carrier Gas: He, 1.4 mL/minute (constant flow)
Inlet Temperature: 320°C
Injection Mode: split (split ratio = 1:100)
Oven Temperature: 50°C kept for 5 minutes,
increased by 5°C/minute, 320°C kept for 6 minutes
Injection Volume: 1 µL
(TOFMS section)
Device: JMS-T100GC manufactured by JEOL Ltd.
Counter Electrode Voltage: 10.0 kV
Ionization Method: FI + (Field Ionization)
GC Interface Temperature: 250°C
Measured Mass Range: 35 to 500

The ratio of isoparaffin/n-paraffin in the paraffin components in the gas oil compositions of the present invention is preferably 0.80 or greater, more preferably 0.90 or greater, and more preferably 1.00 or greater in order to maintain the low temperature performances. The isoparaffin and n-paraffin contents used herein can be derived using the above-described GC-TOFMS.

The water content of the gas oil composition of the present invention is preferably 300 ppm by volume or less, more preferably 250 ppm by volume or less, and more preferably 200 ppm by volume in view of adverse affects to fuel tanks and with the objective of suppressing of hydrolysis of ester compounds. The water content used herein denotes the water contend defined by JIS K 2275 "Crude oil and petroleum products-Determination of water content".

The acid number increase of the gas oil compositions of the present invention after an oxidation stability test is preferably 0.12 mgKOH/g or less, more preferably 0.10 mgKOH/g or less, and more preferably 0.08 mgKOH/g or less in view of storage stability and compatibility to parts.

The oxidation stability test used herein is carried out at a temperature of 115°C under oxygen bubbling for 16 hours in accordance with ASTM D2274-94.

When the gas oil composition of the present invention is a gas oil composition satisfying the JIS No. 2 gas oil standard, the cold filter plugging point (CFPP) is necessarily -5°C or lower which is a JIS No. 2 gas oil standard. Further with the objective of prevention of plugging of the pre-filter of a diesel powered automobile, the cold filter plugging point is preferably -6°C or lower and more preferably -7°C or lower. When the gas oil composition of the present invention is a gas oil composition satisfying the JIS No. 3 gas oil standard, the cold filter plugging point (CFPP) is necessarily -12°C or lower which is a JIS No. 3 gas oil standard. Further with the objective of prevention of plugging of the pre-filter of a diesel powered automobile, the cold filter plugging point is preferably -13°C or lower and more preferably -14°C or lower. The cold filter plugging point used herein denotes the plugging point measured in accordance with JIS K 2288 "Gas oil-Determination of cold filter plugging point".

When the gas oil composition of the present invention is a gas oil composition satisfying the JIS No. 2 gas oil standard, the pour point is necessarily -7.5°C or lower which is a JIS No. 2 gas oil standard. Further in view of low temperature startability and drivability and with the objective of maintaining the injection performance of an electronically controlled fuel injection pump, the pour point is preferably -10°C or lower. When the gas oil composition of the present invention is a gas oil composition satisfying the JIS No. 3 gas oil standard, the pour point is necessarily -20°C or lower which is a JIS No. 3 gas oil standard. Further in view of low temperature startability and drivability and with the objective of maintaining the injection performance of an electronically controlled fuel injection pump, the pour point is preferably -23°C or lower. The pour point used herein denotes the pour point measured in accordance with JIS K 2269 "Testing Method for Pour Point and Cloud Point of Crude Oil and Petroleum Products".

With regard to the distillation characteristics of the gas oil composition of the present invention satisfying the JIS No. 2 gas oil standard, the 90% distillation temperature is necessarily 350°C or lower which is a JIS No. 2 gas oil standard, preferably 340°C or lower, more preferably 330°C or lower, and more preferably 320°C or lower. If the 90% distillation temperature exceeds the upper limit, the emissions of PM and fine particles tend to increase. The 90% distillation temperature is preferably 280°C or higher, more preferably 285°C or higher, more preferably 290°C or higher, and more preferably 295°C or higher. If the 90% distillation temperature is lower than the lower limit, a sufficient fuel efficiency effect would not be attained, leading to a tendency that the engine output is reduced.

There is no particular restriction on the 10% distillation temperature. However, the 10% distillation temperature is preferably 265°C or lower and more preferably 260°C or lower. If the 10% distillation temperature exceeds the upper limit, the exhaust gas performance of an engine tends to be deteriorated. The 10% distillation temperature is preferably 160°C or higher, more preferably 170°C or higher, and more preferably 180°C or higher. If the 10% distillation temperature is lower than the lower limit, the engine output and high temperature startability tend to be deteriorated.

With regard to the distillation characteristics of the gas oil composition of the present invention satisfying the JIS No. 3 gas oil standard, the 90% distillation temperature is necessarily 330°C or lower which is a JIS No. 3 gas oil standard, preferably 325°C or lower, more preferably 320°C or lower, and more preferably 315°C or lower. If the 90% distillation temperature exceeds the upper limit, the emissions of PM and fine particles tend to increase. The 90% distillation temperature is preferably 270°C or higher, more preferably 275°C or higher, and further more preferably 280°C or higher. If the 90% distillation temperature is lower than the lower limit, a sufficient fuel efficiency effect would not be attained, leading to a tendency that the engine output is reduced.

The 10% distillation temperature is necessarily 140°C or higher, more preferably 145°C or higher, more preferably 150°C or higher, and more preferably 155°C or higher. If the 10% distillation temperature is lower than the lower limit, the engine output and high temperature startability tend to be deteriorated. The 10% distillation temperature is necessarily 190°C or lower, preferably 185°C or lower, and more preferably 180°C or lower. If the 10% distillation temperature exceeds the upper limit, the exhaust gas performance of an engine tends to be deteriorated.

The 10% distillation temperature and 90% distillation temperature used herein denote the values measured in accordance with JIS K 2254 "Petroleum products-Determination of distillation characteristics".

When the gas oil composition of the present invention is a gas oil composition satisfying the JIS No. 2 gas oil standard, the kinematic viscosity at 30°C is necessarily 2.5 mm²/s or higher which is a JIS No. 2 gas oil standard, preferably 2.7 mm²/s or higher, and more preferably 2.9 mm²/s or higher. If the kinematic viscosity is lower than 2.5 mm²/s, it tends to be difficult to control the fuel injection timing at the fuel injection pump side, and lubricity at each part of the fuel injection pump installed in an engine would be reduced. The kinematic viscosity is preferably 5 mm²/s or lower, more preferably 4.7 mm²/s or lower, and more preferably 4.5 mm²/s or lower. If the kinematic viscosity exceeds 5 mm²/s, the fuel injection system is destabilized due to an increase in resistance therein and thus the NOx and PM concentrations in the exhaust gas are increased. When the gas oil composition of the present invention is a gas oil composition satisfying the JIS No. 3 gas oil standard, the kinematic viscosity at 30°C is necessarily 2.0 mm²/s or higher which is a JIS No. 3 gas oil standard, preferably 2.2 mm²/s or higher, and more preferably 2.4 mm²/s or higher. If the kinematic viscosity is lower than 2.0 mm²/s, it tends to be difficult to control the fuel injection timing at the fuel injection pump side, and lubricity at each part of the fuel injection pump of an engine would be reduced. The kinematic viscosity is preferably 4.5 mm²/s or lower, more preferably 4.3 mm²/s or lower, and more preferably 4.0 mm²/s or lower. If the kinematic viscosity exceeds 4.5 mm²/s, the fuel injection system is destabilized due to an increase in resistance therein and thus the NOx and PM concentrations in the exhaust gas are increased. The kinematic viscosity used herein denotes the value measured in accordance with JIS K 2283 "Crude petroleum and petroleum products-Determination of kinematic viscosity and calculation of viscosity index from kinematic viscosity".

The carbon residue of the 10% distillation residue of the gas oil compositions of the present invention is necessarily 0.1 percent by mass or less. With the objectives of reducing fine particles and PM and maintaining the performances of the exhaust post-processing system installed in an engine, the carbon residue is preferably 0.08 percent by mass or less and more preferably 0.06 percent by mass or less.

The carbon residue of the 10% distillation residue used herein denotes that measured in accordance with JIS K 2270 "Crude petroleum and petroleum products-Determination of carbon residue".

The ash content of the gas oil compositions of the present invention is preferably less than 0.01 percent by mass. If the ash content exceeds the upper limit, the ash becomes the core of PM during combustion in an engine and the amounts of the entire PM and nano particles are increased. Further when the ash is exhausted as it is, it is accumulated in the exhaust post-processing system, and thus the performances thereof are deteriorated. The ash content used herein denotes the value measured in accordance with JIS K 2272 "Testing Methods for Ash and Sulfated Ash of Crude Oil and Petroleum Products".

There is no particular restriction on the electric conductivity of the gas oil compositions of the present invention. However, the electric conductivity is preferably 50 pS/m or greater in view of safety. An anti-static additive may be added to the gas oil composition in order to improve the electric conductivity thereof. The electric conductivity used herein denotes the value measured in accordance with JIS K 2276 "Petroleum products-Testing methods for aviation fuels".

The total insoluble content of the gas oil compositions after an oxidation stability test is preferably 2.0 mg/100 mL or less, more preferably 1.5 mg/100 mL or less, more preferably 1.0 mg/100 mL or less, and more preferably 0.5 mg/100 mL or less. The oxidation stability test used herein is carried out at a temperature of 95°C under oxygen bubbling for 16 hours in accordance with ASTM D2274-94. The total insoluble content after an oxidation stability test denotes the value measured in accordance with the foregoing oxidation stability test.

The peroxide number of the gas oil compositions of the present invention after the above-described oxidation stability test is preferably 10 ppm by mass or less, more preferably 8 ppm by mass or less, and more preferably 5 ppm by mass or less in view of storage stability and compatibility to parts. The peroxide number used herein denotes the value measured in accordance with JPI-5S-46-96 prescribed in JPI Standard and Manuals Testing Method for Petroleum Products published by Japan Petroleum Inst. An anti-oxidant or a metal deactivator may be added to the gas oil composition in order to reduce the total insoluble content or the peroxide number.

The total acid number of the gas oil compositions of the present invention is preferably 1.0 mgKOH/g or less. The total acid number indicates the amount of the free fatty acid in a mixture. If the total acid number is larger, parts would be adversely affected by acid compounds. Therefore, the total acid number is preferably 1.0 mgKOH/g or less, more preferably 0.9 mgKOH/g or less, and more preferably 0. 8 mg/KOH or less, and particularly preferably 0.13 mg/KOH or less. The total acid number used herein denotes that measured in accordance with JIS K 2501 "Petroleum products and lubricants-Determination of neutralized number".

If necessary, the gas oil compositions of the present invention may be blended with a cetane number improver as much as is sufficient so as to enhance the cetane number.

The cetane number improver may be any of various compounds known as a cetane number improver for gas oil. Examples of such a cetane number improver include nitrate esters and organic peroxides. These cetane number improvers may be used alone or in combination.

Preferred for use in the present invention are nitrate esters. Examples of the nitrate esters include various nitrates such as 2-chloroethyl nitrate, 2-ethoxyethyl nitrate, isopropyl nitrate, butyl nitrate, primary amyl nitrate, secondary amyl nitrate, isoamyl nitrate, primary hexyl nitrate, secondary hexyl nitrate, n-heptyl nitrate, n-octyl nitrate, 2-ethylhexyl nitrate, cyclohexyl nitrate, and ethylene glycol dinitrate. Particularly preferred are alkyl nitrates having 6 to 8 carbon atoms.

The content of the cetane number improver is preferably 500 ppm by mass or more, more preferably 600 ppm by mass or more, more preferably 700 ppm by mass or more, more preferably 800 ppm by mass or more, and most preferably 900 ppm by mass or more on the basis of the total mass of the gas oil composition. If the content of the cetane number improver is less than 500 ppm by mass, the cetane number improving effect may not be attained sufficiently, leading to a tendency that PM, aldehydes, and NOx in the exhaust gas from a diesel engine are not reduced sufficiently. There is no particular restriction on the upper limit content of the cetane number improver. However, the upper limit is preferably 1400 ppm by mass or less, more preferably 1250 ppm by mass or less, more preferably 1100 ppm by mass or less, and most preferably 1000 ppm by mass or less, on the basis of the total mass of the gas oil composition.

The cetane number improver may be any of those synthesized in accordance with conventional methods or commercially available products. Such products in the name of cetane number improver are available in a state wherein the effective component contributing to an improvement in cetane number (i.e., cetane number improver itself) is diluted with a suitable solvent. In the case where the gas oil composition of the present invention is prepared using any of such commercially available products, the content of the effective component is preferably within the above-described range.

In addition to the cetane number improver, the gas oil composition may be blended with other additives, particularly preferably with a lubricity improver and/or a detergent.

The lubricity improver may be any one or more selected from carboxylic acid-, ester-, alcohol- and phenol-based lubricity improvers. Among these lubricity improvers, preferred are carboxylic acid-and ester-based lubricity improvers.

The carboxylic acid-based lubricity improver may be linoleic acid, oleic acid, salicylic acid, palmitic acid, myristic acid or hexadecenoic acid or a mixture of two or more of these carboxylic acids.

Examples of the ester-based lubricity improver include carboxylic acid esters of glycerin. The carboxylic acid forming the carboxylic acid ester may be of one or more types. Specific examples of the carboxylic acid include linoleic acid, oleic acid, salicylic acid, palmitic acid, myristic acid or hexadecenoic acid.

There is no particular restriction on the amount of the lubricity improver to be blended if the HFRR wear scar diameter (WS1.4) is within the above-described preferred range. However, the amount is preferably 35 ppm by mass or more and more preferably 50 ppm by mass or more on the basis of the total mass of the composition. When the lubricity improver is blended in an amount within these ranges, the lubricity improver can effectively perform its efficacy thereof. For example, in a diesel engine equipped with a distribution type injection pump, the lubricity improver can suppress the driving torque from increasing and can reduce wear on each part of the pump while the engine is driven. The upper limit amount is preferably 150 ppm by mass or less and more preferably 105 ppm by mass or less because its effect as balanced with the amount is not obtained.

Examples of the detergents include ashless dispersants, for example, imide compounds; alkenyl succinimides such as polybutenyl succinimide synthesized from polybutenyl succinic anhydrate and ethylene polyamines; succinic acid esters such as polybutenyl succinic acid ester synthesized from polyhydric alcohols such as pentaerythritol and polybutenyl succinic anhydrate; copolymerized polymers such as copolymers of dialkylaminoethyl methacrylates, polyethylene glycol methacrylates, or vinylpyrrolidon and alkylmethacrylates; and reaction products of carboxylic acids and amines. Among these, preferred are alkenyl succinimides and reaction products of carboxylic acids and amines. These detergents may be used alone or in combination.

When an alkenyl succinimide is used, an alkenyl succinimide having a molecular weight of 1000 to 3000 may be used alone, or an alkenyl succinimide having a molecular weight of 700 to 2000 and an alkenyl succinimide having a molecular weight of 10000 to 20000 may be used in combination.

Carboxylic acids constituting reaction products of carboxylic acids and amines may be of one or more types. Specific examples of the carboxylic acids include fatty acids having 12 to 24 carbon atoms and aromatic carboxylic acids having 7 to 24 carbon atoms. Examples of fatty acids having 12 to 24 carbon atoms include, but not limited thereto, linoleic acid, oleic acid, palmitic acid, and myristic acid. Examples of aromatic carboxylic acids having 7 to 24 carbon atoms include, but not limited thereto, benzoic acid and salicylic acid. Amines constituting reaction products of carboxylic acids and amines may be of one or more types. Typical examples of amines used herein include, but not limited thereto, oleic amines. Various amines may also be used.

There is no particular restriction on the amount of the detergent to be blended. However, the amount is preferably 30 ppm by mass or more, more preferably 60 ppm by mass or more, and more preferably 80 ppm by mass or more, on the basis of the total mass of the composition, because the detergent can perform its effect to suppress a fuel injection nozzle from plugging. The effect may not be obtained if the amount is less than 30 ppm by mass. On the other hand, if the detergent is blended in a too much amount, its effect as balanced with the amount is not obtained. Therefore, the amount of the detergent is preferably 300 ppm by mass or less and more preferably 180 ppm by mass or less because the detergent may increase the amounts of NOx, PM and aldehydes in the exhaust gas from a diesel engine.

Like the above-described cetane number improver, products in the name of lubricity improver or detergent are available in a state wherein the effective component contributing to an improvement in lubricity or to detergency is diluted with a suitable solvent. In the case where such products are blended with the gas oil composition of the present invention, the content of the effective component is preferably within the above-described range.

In order to further enhance the properties of the gas oil compositions of the present invention, other known fuel oil additives (hereinafter referred to as "other additives" for convenience) may be used alone or in combination. Examples of other additives include low temperature fluidity improvers such as ethylene-vinyl acetate copolymers and alkenylsuccinic amides; phenol- and amine-based anti-oxidants; metal deactivators such as salicyliden derivatives; anti-icing agents such as polyglycol ethers; anti-corrosion agents such as aliphatic amines and alkenyl succinic acid esters; anti-static additives such as anionic, cationic, and amphoteric surface active agents; coloring agents such as azo dye; and silicone-based defoaming agents.

The amounts of other additives may be arbitrarily selected. However, the amount of each of other additives is preferably 0.5 percent by mass or less and more preferably 0.2 percent by mass or less, on the basis of the total mass of the composition.

### [Effects of the Invention]

The gas oil composition of the present invention comprising an environment friendly base gas oil produced from an animal or vegetable fat and a component originating therefrom has excellent life cycle CO₂ emission properties, fuel efficiency, oxidation stability, less affective to parts properties, and low-temperature startability.

### [Examples]

Hereinafter, the present invention will be described in more details by way of the following examples and comparative examples, which should not be construed as limiting the scope of the invention. [Examples 1 to 10 and Comparative Examples 1 to 6]

The vacuum gas oil and vegetable fats having the properties set forth in Table 1 were reacted under the reaction conditions set forth in Table 2 so as to produce environment friendly base gas oils 1 to 3 set forth in Table 3 and environment friendly base gas oils 4 to 6 set forth in Table 4.

The properties of fatty acid alkyl esters produced by esterifying the vegetable fats set forth in Table 1 are also set forth in Table 3. These fatty acid alkyl esters are methyl ester compounds produced by reacting the vegetable fats with methanol. An ester exchange reaction was used wherein an ester compound is produced by reacting the vegetable fats directly with an alkyl alcohol, stirring at a temperature of 70°C for one hour in the presence of an alkyl catalyst (sodium methylate) .

The environment friendly base gas oils 1 to 3, methyl-esterified products of the vegetable fats, and hydrorefined oil 1 which is a petroleum base oil set forth in Table 3 are blended to produce gas oil compositions satisfying the JIS No. 2 gas oil standard (Table 5).

The environment friendly base gas oils 4 to 6, methyl-esterified products of the vegetable fats, and hydrorefined oil 2 which is a petroleum base oil set forth in Table 4 are blended to produce gas oil compositions satisfying the JIS No. 3 gas oil standard (Table 6).

The following additives were used.
Lubricity Improver: a carboxylic acid mixture containing linoleic acid as the main component
Detergent: a reaction product of a carboxylic acid mixture containing linoleic acid as the main component and oleic amine
Low Temperature Fluidity Improver: an ethylene-vinyl acetate copolymer

Tables 5 and 6 also shows the blend ratio in each of the gas oil compositions, and the density at 15°C, kinematic viscosity at 30°C, flash point, sulfur content, oxygen content, distillation characteristics, aromatic content, cetane number, cetane index, pour point, plugging point, carbon residue content of the 10% distillation residue, ash content, water content, insoluble content after an oxidation stability test, peroxide number, total acid number, electrical conductivity, and wear scar diameter, of each of the gas oil compositions.

These properties were measured by the following methods.

The density indicates that measured in accordance with JIS K 2249 "Crude petroleum and petroleum products-Determination of density and petroleum measurement tables based on a reference temperature (15°C)".

The kinematic viscosity indicates that measured in accordance with JIS K 2283 "Crude petroleum and petroleum products-Determination of kinematic viscosity and calculation of viscosity index from kinematic viscosity".

The sulfur content indicates the mass content of the sulfur components on the basis of the total mass of the composition, measured in accordance with JIS K 2541 "Crude oil and petroleum products-Determination of sulfur content".

The oxygen content was measured by an elemental analysis method.

The distillation characteristics are values measured in accordance with JIS K 2254 "Petroleum products-Determination of distillation characteristics".

The aromatic content is the volume percentage (volume %) of the aromatic component content measured in accordance with JPI-5S-49-97 " Petroleum Products -Determination of Hydrocarbon Types -High Performance Liquid Chromatography" prescribed in JPI Standard and Manuals Testing Method for Petroleum Products published by Japan Petroleum Inst.

The water content is that defined by JIS K 2275 "Crude oil and petroleum products-Determination of water content".

The flash point is the value measured in accordance with JIS K 2265 "Crude oil and petroleum products-Determination of flash point".

The total acid number is that measured in accordance with JIS K 2501 "Petroleum products and lubricants-Determination of neutralized number".

The cetane index is the value calculated in accordance with "8.4 cetane number calculation method using variables equation" prescribed in JIS K 2280 "Petroleum products-Fuels-Determination of octane number, cetane number and calculation of cetane number". The cetane index defined by the JIS standards is not generally applied to gas oil containing a cetane number improver. However, in the present invention, "8.4 cetane number calculation method using variables equation" is applied to a gas oil containing a cetane number improver, and the value obtained thereby is also defined as cetane index.

The cetane number denotes that measured in accordance with "7. Cetane number test method" prescribed in JIS K 2280 "Petroleum products-Fuels-Determination of octane number, cetane number and calculation of cetane index".

The HFRR wear scar diameter (WS1.4) denotes lubricity measured in accordance with JPI-5S-50-98 "Gas oil -Testing Method for Lubricity" prescribed in JPI Standard and Manuals Testing Method for Petroleum Products published by Japan Petroleum Inst.

The plugging point indicate that measured in accordance with JIS K 2288 "Gas oil-Determination of cold filter plugging point".

The pour point denotes that measured in accordance with JIS K 2269 "Testing Method for Pour Point and Cloud Point of Crude Oil and Petroleum Products".

The carbon residue content of the 10% distillation residue denotes that measured in accordance with JIS K 2270 "Crude petroleum and petroleum products-Determination of carbon residue".

The ash content denotes the value measured in accordance with JIS K 2272 "Testing Methods for Ash and Sulfated Ash of Crude Oil and Petroleum Products".

The insoluble content after an oxidation stability test denote the value measured at a temperature of 95°C under oxygen bubbling for 16 hours in accordance with ASTM D2274-94.

The peroxide number denotes the value measured in accordance with JPI-5S-46-96 prescribed in JPI Standard and Manuals Testing Method for Petroleum Products published by Japan Petroleum Inst.

The electrical conductivity denotes the value measured in accordance with JIS K 2276 "Petroleum products-Testing methods for aviation fuels".

As apparent from Table 5, in Examples 1 to 5 wherein the environment friendly base gas oils and mixtures thereof with the hydrorefined oil were used and blended in amounts within the range defined by the present invention, the resulting gas oil compositions satisfied the requirements wherein the sulfur content is 5 ppm by mass or less and the oxygen content is 1 percent by mass or less. Furthermore, Examples 1 to 5 ensure the easy production of oil compositions satisfying the JIS No. 2 gas oil properties. Whereas, in Comparative Examples 1 to 4 wherein the gas oil compositions were produced without using the specific environment friendly base gas oils, the compositions intended by the present invention are not necessarily produced.

As apparent from Table 6, in Examples 6 to 10 wherein the environment friendly base gas oils and mixtures thereof with the hydrorefined oil were used and blended in amounts within the range defined by the present invention, the resulting gas oil compositions satisfied the requirements wherein the sulfur content is 5 ppm by mass or less and the oxygen content is 1 percent by mass or less. Furthermore, Examples 6 to 10 ensure the easy production of oil compositions for cold district use satisfying the JIS No. 3 gas oil properties. Whereas, in Comparative Examples 1, 2, 5 and 6 wherein the gas oil compositions were produced without using the specific environment friendly base gas oils, the compositions for cold district use intended by the present invention are not necessarily produced.

The following various tests were carried out using the gas oil compositions of Examples 1 to 10 and Comparative Examples 1 to 6. All of the test results are set forth in Tables 7 and 8. It is apparent from the results set forth in Table 7 that the gas oil compositions of Examples 1 to 5 were less in life cycle carbon dioxide emissions, excellent in fuel efficiency, low temperature startability, and oxidation stability, and gave less adverse affect to the parts, compared with the gas oil compositions of Comparative Examples 1 to 4. It is also apparent from the results set forth in Table 8 that the gas oil compositions of Examples 6 to 10 were less in life cycle carbon dioxide emissions, excellent in low temperature startability and oxidation stability, and gave less adverse affect to the parts, compared with the gas oil compositions of Comparative Examples 1, 2, 5 and 6.

The tests using a vehicle was carried out in accordance with Exhibit 27 "10/15 Mode Exhaust Emissions Test procedure for Diesel-Powered Motor Vehicles" in "Traffic Safety Nuisance Research Institute's Automobile Type Approval Test Standard" supervised by Ministry of Land, Infrastructure, and Transport Japan.

### (Fuel Efficiency Test)

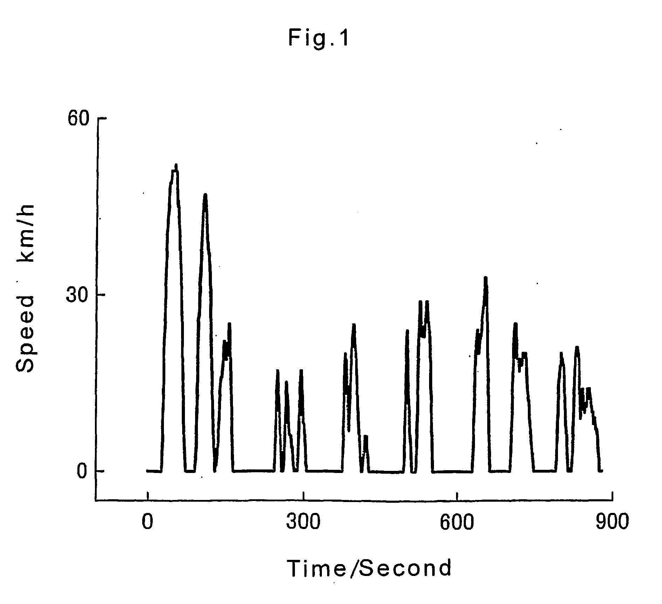

The fuel efficiency of the gas oil compositions satisfying the JIS No. 2 gas oil properties was measured using the following automobile equipped with a diesel powered engine (Vehicle 1). The test was carried out under the transient driving mode simulating actual running, shown in Fig. 1. With regard to fuel efficiency, the volume flow of the fuel consumed during the test mode was fuel-temperature compensated and then converted to weight. Each of the results was then quantified by comparing it with the result of Comparative Example 3 (hydrorefined oil 1), which result was assumed 100.
(Vehicle Specifications): Vehicle 1 Type of engine: in-line 4 cylinder diesel engine with an intercooled supercharger
Displacement: 3 L
Compression ratio: 18.5
Maximum power: 125 kW/3400 rpm
Maximum torque: 350 Nm/2400 rpm
Adopted regulation: 1997 Exhaust Gas Emission Regulation
Vehicle weight: 1900 kg
Transmission: 4-speed automatic transmission
Exhaust post-processing system: oxidation catalyst

### (Calculation of life cycle CO₂)

Life cycle CO₂ was calculated separately as the CO₂ emitted as a result of combustion of the gas oil compositions in a vehicle equipped with a diesel-powered engine and as the CO₂ generated from oil-well drilling to pumping to a vehicle fuel tank.

The CO₂ emitted by combustion (hereinafter referred to as "Tank to Wheel CO₂" was calculated as the emissions per unit calorific value of each gas oil composition on the basis of CO₂ emissions, driving fuel efficiency, and fuel density when the above vehicle test was carried out.

The CO₂ generated from oil-well drilling to pumping to a vehicle fuel tank (hereinafter referred to as "Well to Tank CO₂") was calculated as the total CO₂ emissions during a sequence starting from the drilling of material and crude oil resources, through transportation, processing, and delivery, to pumping to a vehicle's gas tank. For calculation of "Well to Tank CO₂", the calculation was carried out in consideration of the carbon dioxide generated during the following (1B) to (5B) events. Data required for the calculation was the oil refinery operation performance date possessed by the inventors of the present invention.
(1B) Carbon dioxide emissions accompanied with the use of fuel for various processing devices and facilities such as boilers
(2B) Carbon dioxide emissions accompanied with reforming reaction in a hydrogen producing device in a processing using hydrogen
(3B) Carbon dioxide emissions accompanied with regeneration of a catalyst if the processing is carried out through a device such as a catalytic cracking device requiring continuous catalyst regeneration
(4B) Carbon dioxide emissions when a gas oil composition was produced or shipped at Yokohama, Japan, delivered therefrom to Sendai, Japan, and pumped into a vehicle there
(5B) Carbon dioxide emissions when an animal or vegetable fat and a component originating therefrom were obtained from Malaysia or regions therearound, and a gas oil composition was produced in Yokohama, Japan

If an animal or vegetable fat and a component originating therefrom is used as fuel, a rule established in Kyoto Protocol that the carbon dioxide emissions resulting from combustion of such fuel is not counted is applied. This rule was thus applied to the above-described "Tank to Wheel CO₂" calculation.

Tables 7 and 8 show the "Tank to Wheel CO₂" and "Well to Tank CO₂" emissions as calculated above as well as the total of these emissions, i.e., life cycle CO₂ emissions (LC). Each of the results is quantified by comparing it with the results of Comparative Example 3 (hydrorefined oil 1) and Comparative Example 5 (hydrorefined oil 2), the results of which Comparative Examples are assumed 100.

### (Low temperature startability 1)

Using Vehicle 1, the gas oil compositions of Examples 1 to 5, satisfying the JIS No. 2 gas oil properties were subjected to a test for evaluating their low temperature startability. First of all, on a chassis dynamometer capable of controlling the environment temperature, the test was carried out at room temperature by (1) flashing (washing) the fuel system of a test diesel vehicle with a fuel to be evaluated; (2) draining out the flashing fuel; (3) replacing the main filter with new one; and (4) feeding the fuel tank with the fuel to be evaluated in a specific amount (1/2 of the tank volume of the test vehicle). The test was continued by (5) cooling rapidly the environment temperature from room temperature to 5°C; (6) keeping the temperature at 5°C for one hour; (7) cooling gradually at a rate of 1°C/h till reaching to the predetermined temperature (-7°C); and (8) starting the engine after the temperature was kept at the predetermined temperature for one hour. If the engine did not start even after 10 second cranking was repeated twice at an interval of 30 seconds, the fuel was evaluated as "poor". If the engine started while 10 second cranking was repeated twice at an interval of 30 seconds, the fuel was evaluated as "good".

### (Low temperature startability 2)

Using Vehicle 1, the gas oil compositions of Examples 6 to 10, satisfying the JIS No. 3 gas oil properties were subjected to a test for evaluating their low temperature startability. First of all, on a chassis dynamometer capable of controlling the environment temperature, the test was carried out at room temperature by (1) flashing (washing) the fuel system of a test diesel vehicle with a fuel to be evaluated; (2) draining out the flashing fuel; (3) replacing the main filter with new one; and (4) feeding the fuel tank with the fuel to be evaluated in a specific amount (1/2 of the tank volume of the test vehicle). The test was continued by (5) cooling rapidly the environment temperature from room temperature to 5°C; (6) keeping the temperature at 5°C for one hour; (7) cooling gradually at a rate of 1°C/h till reaching to the predetermined temperature (-18°C); and (8) starting the engine after the temperature was kept at the predetermined temperature for one hour. If the engine did not start even after 10 second cranking was repeated twice at an interval of 30 seconds, the fuel was evaluated as "poor". If the engine started while 10 second cranking was repeated twice at an interval of 30 seconds, the fuel was evaluated as "good".

### (Oxidation stability test)

The fuels were acceleratingly deteriorated at a temperature of 95°C under oxygen bubbling for 16 hours in accordance with ASTM D2274-94. The color of the fuels were observed before and after the test. If the color was changed, the fuel was evaluated as "poor". If the color was not changed, the fuel was evaluated as "good".

### (Rubber swelling test)

To confirm the influence of the fuels to a rubber part used for O-rings which are parts of an engine, the following immersion test was carried out. The rubber part used for evaluation was a nitrile rubber (medium nitrile rubber) containing acrylonitrile which is one of the compounds constituting the rubber, in an amount of 25 percent or more and 35 percent or less of the whole rubber, as the bound mass center value. The rubber part was immersed in each of the test fuels heated and kept at a temperature of 100°C, for 70 hours in accordance with MIL R6855. The evaluation was made by comparing and quantifying the volume change in the test rubber part after 70 hours. If the absolute value of the volume change percentage was ±20 percent or greater, the part stability was evaluated as "failure". If the absolute value was within the range of ±10 percent or greater and ±20 percent or less, the part stability was evaluated as "borderline". If the absolute value was ±10 percent or less, the part stability was evaluated as "pass".

### (Examples 11 and 12, and Comparative Examples 7 and 8)

Vegetable fat 1 having the properties set forth in Table 9 or a mixed oil of petroleum hydrorefined oil 3 and vegetable fat 1 mixed at a ratio of 80 : 20 were reacted under the reaction conditions set forth in Table 10 so as to produce environment friendly base gas oils set forth in Table 11.

The properties of a fatty acid alkyl ester produced by esterifying the vegetable fat set forth in Table 9 are also set forth in Table 11. The fatty acid alkyl ester is a methyl ester compound produced by reacting the vegetable fat with methanol. An ester exchange reaction was used wherein an ester compound is produced by reacting the vegetable fat directly with an alkyl alcohol, stirring at a temperature of 70°C for one hour in the presence of an alkyl catalyst(sodium methylate).

The environment friendly base gas oils, methyl-esterified product of the vegetable fat, and hydrorefined oil which is a petroleum base oil set forth in Table 11 are blended to produce gas oil compositions (Examples 11 and 12, and Comparative Examples 7 and 8).

As apparent from Table 12, in Examples 11 and 12 wherein the environment friendly base gas oil and a mixture thereof with the hydrorefined oil were used and blended in amounts within the range defined by the present invention, these examples ensure the easy production of the gas oil compositions, whose 90% distillation temperature was 360° or lower, total aromatic content was 15 percent by volume or less, cetane index was 45 or greater, sulfur content was 5 ppm by mass or less, oxygen content was 1 percent by mass or less, triglyceride content was 0.01 percent by mass or less, acid number was 0.13 mgKOH/g or less, acid number increase after an oxidation stability test was 0.12 mgKOH/g or less, and single naphthene content was 10 percent by volume or more. Whereas, in Comparative Examples 7 and 8 wherein gas oil compositions were produced without using the specific environment friendly base gas oils, the compositions intended by the present invention are not necessarily produced.

Next, various tests were carried out using each of the gas oil compositions of Examples 11 and 12, and Comparative Examples 7 and 8. All of the test results are set forth in Table 13. It is apparent from the results set forth in Table 13 that the gas oil compositions of Examples 7 and 8 were less in life cycle carbon dioxide emissions, and excellent in fuel efficiency, exhaust gas properties, and oxidation stability, compared with the gas oil compositions of Comparative Examples 7 and 8.

### (Vehicle exhaust gas test, Fuel efficiency test)

The fuel efficiency was measured using a vehicle equipped with a diesel-powered engine (Vehicle 1). The test was carried out under the transient driving mode simulating actual running, shown in Fig. 1. With regard to fuel efficiency, the volume flow of the fuel consumed during the test mode was fuel-temperature compensated and then converted to weight. Each of the results was then quantified by comparing it with the result of the fuel of Comparative Example 7, which result was assumed 100.

### (Examples 13 to 15, and Comparative Examples 9 to 11)

Vegetable fat 1 having the properties set forth in Table 9 or a mixed oil of petroleum hydrorefined oil 3 and vegetable fat 1 mixed at a ratio of 80 : 20 were reacted under the reaction conditions set forth in Table 14 so as to produce environment friendly base gas oils set forth in Table 15.

The properties of a fatty acid alkyl ester produced by esterifying the vegetable fat set forth in Table 9 are also set forth in Table 15. The fatty acid alkyl ester is a methyl ester compound produced by reacting the vegetable fat with methanol. An ester exchange reaction was used wherein an ester compound is produced by reacting the vegetable fat directly with an alkyl alcohol, stirring at a temperature of 70°C for one hour in the presence of an alkyl catalyst(sodium methylate).

The environment friendly base gas oils, methyl-esterified product of the vegetable fat, and hydrorefined oil which is a petroleum base oil set forth in Table 15 are blended to produce gas oil compositions (Examples 13 to 15, and Comparative Examples 9 to 11).

The above-described lubricity improver, detergent, and low temperature fluidity improver were used as additives.

Table 16 shows the blend ratio in each of the gas oil compositions, and the density at 15°C, kinematic viscosity at 30°C, flash point, sulfur content, oxygen content, distillation characteristics, aromatic content, cetane number, cetane index, pour point, plugging point, carbon residue content of the 10% distillation residue, ash content, water content, insoluble content after an oxidation stability test, isoparaffin/n-paraffin ratio, peroxide number, total acid number, total acid number increase after an acceleration test, electrical conductivity, and wear scar diameter, of each of the gas oil compositions.

As apparent from Table 16, in Examples 13 to 15 wherein the environment friendly base gas oil and a mixture thereof with the hydrorefined oil were used and blended in amounts within the range defined by the present invention, these examples ensure the easy production of the gas oil compositions, whose sulfur content was 5 ppm by mass or less, oxygen content was 1 percent by mass or less, 90% distillation temperature was 360° or lower, total aromatic content was 15 percent by volume or less, cetane index was 45 or greater, triglyceride content was 0.01 percent by mass or less, acid number was 0.13 mgKOH/g or less, acid number increase after an oxidation stability test was 0.12 mgKOH/g or less, cold filter plugging point (CFPP) was -5°C or lower, pour point (PP) was -10 °C or lower, and isoparaffin/n-paraffin ratio in the paraffin content was 0.80 or greater. Whereas, in Comparative Examples 9 to 11 wherein gas oil compositions were produced without using the specific environment friendly base gas oils, the compositions intended by the present invention are not necessarily produced.

Next, various tests were carried out using each of the gas oil compositions of Examples 13 to 15, and Comparative Examples 9 to 11. All of the test results are set forth in Table 17. It is apparent from the results set forth in Table 17 that the gas oil compositions of Examples 13 to 15 were less in life cycle carbon dioxide emissions, and excellent in low temperature startability and oxidation stability, compared with the gas oil compositions of Comparative Examples 9 to 11.

**Table 1**

| | | Vacuum Gas Oil | Vegetable Fat 1 | Vegetable Fat 2 |
|---|---|---|---|---|
| Density (15°C) | kg/m³ | 919 | - | |
| Kinematic Viscosity (100°C) | mm²/s | 6.2 | | |
| n-d-m | %CP | 57 | | |
| | %CN | 23 | | |
| | %CA | 18 | | |
| | RN | 1 | | |
| | RA | 1 | | |
| C mass% | | 85 | | |
| H mass% | | 11 | | |
| Nitorogen Content | mass ppm | 670 | | |
| Sulfer Content | mass% | 2.3 | <1 | <1 |
| Average Molecular Weight | | 335 | - | - |
| Component of 360°C or higher | mass% | 83.0 | - | - |
| Total Acid Number | mgKOH/g | - | 0.07 | 0.05 |
| Percentage of Fatty Acid Groups in Fat mass% | Butyric Acid Group | - | 0 | 0 |
| | Caproic Acid Group | - | 0 | 0 |
| | Caprylic Acid Group | - | 0 | 0 |
| | Capric Acid Group | - | 0 | 0 |
| | Lauric Acid Group | - | 0 | 0 |
| | Myristic Acid Group | - | 1 | 0 |
| | Palmitic Acid Group | - | 44 | 7 |
| | Stearic Acid Group | - | 5 | 3 |
| | Oleic Acid Group | - | 39 | 42 |
| | Linoleic Acid Group | - | 10 | 38 |
| | Linolenic Acid Group | - | 0 | 9 |

**Table 2**

| HDO Catalyst | First Stage | Ni/MO-alumina |
|---|---|---|
| | Second Stage | Ni/W-zeolite (containing alumina) |
| Processing Temperature °C | 400 | |
| Hydrogen Partial Pressure MPa | 11 | |
| LHSV h⁻¹ | 0.7 | |
| Hydrogen/Oil Ratio NL/L | 510 | |

**Table 3**

| Environment Friendly Base Gas Oil | | Base1 | Base2 | Base3 | | | |
|---|---|---|---|---|---|---|---|
| Feedstock | | HDO Treated Vegetable Fat 1 | HDO Treated Vegetable Fat 2 | HDO Treated Mixed Oil of Vacuum Oil (80%) and Vegetable Fat 1 (20%) | Metyl Ester of Vegetable Fat 1 | Metyl Ester of Vegetable Fat 2 | Hydrorefined Oil 1 |
| Yield Ratio of the Fraction Produced by HDO Treating vol% | | 58 | 62 | 71 | - | - | - |
| Density | (15°C) kg/m³ | 772 | 783 | 841 | 874 | 883 | 821 |
| Kinematic Viscosity | (30°C) mm²/s | 2.9 | 3.6 | 4.3 | 5.5 | 5.4 | 3.6 |
| Distillation Characteristics °C | 10% Distillation Temperature | 245.0 | 259.0 | 253.0 | - | - | 188.5 |
| | 50% Distillation Temperature | 268.0 | 277.0 | 278.0 | - | - | 268.5 |
| | 90% Distillation Temperature | 298.0 | 304.0 | 304.0 | - | - | 333.0 |
| Aromatic Content Vol. % | Total Aromatic Content | <1 | <1 | 17.0 | - | - | 17.7 |
| | Single Ring Aromatic Content | <1 | <1 | 14.9 | - | - | 16.2 |
| Pour Point °C | | -10.0 | -12.5 | -15.0 | 16.0 | -7.5 | -2.5 |
| Cold Filter Plugging Point °C | | -12.5 | -15.0 | -12.5 | 12.0 | -7.5 | -1.0 |
| Cetane Number | | 78 | 73 | 63 | 62 | 53 | 57 |
| Sulfer Content | mass ppm | <1 | <1 | 3 | <1 | <1 | 4 |
| Oxygen Content | mass% | <1 | <1 | <1 | 11.9 | 11.4 | <1 |
| Total Acid Number | mgKOH/g | 0.01 | 0.01 | 0.01 | 0.15 | 0.52 | 0.01 |

**Table 4**

| Environment Friendly Base Gas Oil | | Base4 | Base5 | Base6 | |
|---|---|---|---|---|---|
| Feedstock | | HDO Treated Vegetable Fat 1 | HDO Treated Vegetable Fat 2 | HDO Treated Mixed Oil of Vacuum Oil (80%) and Vegetable Fat 1(20%) | Hydrorefined Oil 2 |
| Yield Ratio of the Fraction Produced by HDO Treating vol% | | 78 | 80 | 83 | - |
| Density (15°C) kg/m³ | | 759 | 767 | 815 | 822 |
| Kinematic Viscosity (30°C) mm²/s | | 2.4 | 3.0 | 3.9 | 2.5 |
| Distillation Characteristics °C | 10% Distillation Temperature | 159.0 | 162.0 | 161.5 | 192.5 |
| | 50% Distillation Temperature | 239.0 | 250.0 | 252.0 | 249.0 |
| | 90% Distillation Temperature | 287.0 | 299.0 | 299.5 | 311.0 |
| Aromatic Content Vol. % | Total Aromatic Content | <1 | <1 | 16.4 | 18.9 |
| | Single Ring Aromatic Content | <1 | <1 | 14.5 | 16.7 |
| Pour Point °C | | <-30 | <-30 | <-30 | <-30 |
| Cold Filter Plugging Point °C | | -27.5 | -27.5 | -25.0 | -22.5 |
| Cetane Number | | 73 | 72 | 60 | 54 |
| Sulfer Content mass ppm | | <1 | <1 | 2 | 5 |
| Oxygen Content mass% | | <1 | <1 | <1 | <1 |
| Total Acid Number mgKOH/g | | 0.01 | 0.01 | 0.01 | 0.01 |

**Table 5**

| | | Examples | | | | | Comparative Examples | | | |
|---|---|---|---|---|---|---|---|---|---|---|
| | | 1 | 2 | 3 | 4 | 5 | 1 | 2 | 3 | 4 |
| Hydrorefined Oil 1 | | | | | 80 | 80 | | | 100 | 80 |
| Environment Friendly Base Gas Oil 1 | | 100 | | | 20 | | | | | |
| Environment Friendly Base Gas Oil 2 | | | 100 | | | | | | | |
| Environment Friendly Base Gas Oil 3 | | | | 100 | | 20 | | | | |
| Metyl Ester of Vegetable Fat 1 | | | | | | | 100 | | | 20 |
| Metyl Ester of Vegetable Fat 2 | | | | | | | | 100 | | |
| Density (15°C) | kg/m³ | 772 | 783 | 841 | 830 | 835 | 874 | 883 | 821 | 832 |
| Kinematic Viscosity (30°C) | mm²/s | 2.9 | 3.6 | 4.3 | 3.8 | 4.0 | 5.5 | 5.4 | 3.6 | 3.9 |
| Flash Point | °C | 96 | 101 | 88 | 77 | 79 | 181 | 175 | 72 | 73 |
| Sulfer Content | mass ppm | <1 | <1 | 3 | 3 | 3 | <1 | <1 | 4 | 3 |
| Oxygen Content | mass % | <1 | <1 | <1 | <1 | <1 | 11.9 | 11.4 | <1 | 2.4 |
| Distillation Characteristics °C | 10% Distillation Temperature | 245.0 | 259.0 | 253.0 | 193.0 | 191.5 | - | - | 188.5 | 194.0 |
| | 50% Distillation Temperature | 268.0 | 277.0 | 278.0 | 271.0 | 273.0 | - | - | 268.5 | 289.0 |
| | 90% Distillation Temperature | 298.0 | 304.0 | 305.0 | 319.0 | 320.0 | - | - | 333.0 | 336.0 |
| Aromatic Content Vol. % | Total Aromatic Content | <1 | <1 | 17.0 | 14.1 | 17.5 | - | - | 17.7 | 14.2 |
| | Single Ring Aromatic Content | <1 | <1 | 14.9 | 12.9 | 15.9 | - | - | 16.2 | 13.0 |
| Cetane Number 80 | | 80 | 75 | 63 | 62 | 59 | 62 | 53 | 57 | 58 |
| Cetane Index | | 92 | 89 | 55 | 54 | 52 | - | - | 57 | 57 |
| Pour Point °C | | -10.0 | -12.5 | -15.0 | -12.5 | -7.5 | 16.0 | -7.5 | -2.5 | 1.0 |
| Cold Filter Plugging Point °C | | -12.5 | -15.0 | -12.5 | -10.0 | -7.5 | 12.0 | -7.5 | -1.0 | 3.0 |
| Carbon Residue Content of 10% Distillation Residue | mass % | 0.01 | 0.01 | 0.03 | 0.02 | 0.02 | 0.03 | 0.02 | 0.02 | 0.02 |
| Ash Content | mass % | <0.01 | <0.01 | <0.01 | <0.01 | <0.01 | <0.01 | <0.01 | <0.01 | <0.01 |
| Water Content | mass ppm | 35 | 30 | 52 | 35 | 39 | 78 | 83 | 35 | 46 |
| Total Insoluble Content | mg/100 ml | 0.1 | 0.1 | 0.2 | 0.1 | 0.1 | 0.5 | 0.7 | 0.1 | 0.2 |
| Peroxide Number | mass ppm | 1 | 1 | 2 | 4 | 4 | 7 | 9 | 5 | 6 |
| Total Acid Number | mgKOH/g | 0.01 | 0.01 | 0.01 | 0.01 | 0.02 | 0.15 | 0.52 | 0.01 | 0.04 |
| Conductivity | pS/m | 105 | 125 | 130 | 90 | 75 | 110 | 106 | 95 | 100 |
| Wear Scar Diameter (WS 1.4) | um | 390 | 350 | 400 | 320 | 400 | 380 | 340 | 430 | 410 |
| Lubricity Improver | mass ppm | - | - | - | 80 | - | - | - | 100 | - |
| Low Temperature Fluidity Improver | mass ppm | - | - | - | 200 | - | - | - | - | - |
| Detergent | mass ppm | - | - | - | - | 150 | - | - | - | - |

**Table 6**

| | | Examples | | | | | Comparative Examples | | | |
|---|---|---|---|---|---|---|---|---|---|---|
| | | 6 | 7 | 8 | 9 | 10 | 1 | 2 | 5 | 6 |
| Hydrorefined Oil 2 | | | | | 80 | 80 | | | 100 | 80 |
| Environment Friendly Base Gas Oil 4 | | 100 | | | 20 | | | | | |
| Environment Friendly Base Gas Oil 5 | | | 100 | | | | | | | |
| Environment Friendly Base Gas Oil 6 | | | | 100 | | 20 | | | | |
| Metyl Ester of Vegetable Fat 1 | | | | | | | 100 | | | 20 |
| Metyl Ester of Vegetable Fat 2 | | | | | | | | 100 | | |
| Density (15°C) | kg/m³ | 759 | 767 | 815 | 809 | 820 | 874 | 883 | 822 | 833 |
| Kinematic Viscosity (30°C) | mm²/s | 2.4 | 3.0 | 3.9 | 2.5 | 2.8 | 5.5 | 5.4 | 2.5 | 3.1 |
| Flash Point | °C | 61 | 63 | 67 | 62 | 64 | 181 | 175 | 64 | 66 |
| Sulfer Content | mass ppm | <1 | <1 | 2 | 4 | 4 | <1 | <1 | 5 | 4 |
| Oxygen Content | mass % | <0.1 | <0.1 | <0.1 | <0.1 | <0.1 | 11.9 | 11.4 | <0.1 | 2.4 |
| Distillation Characteristics °C | 10% Distillation Temperature | 159.0 | 162.0 | 161.5 | 166.0 | 165.0 | - | - | 192.5 | 195.0 |
| | 50% Distillation Temperature | 239.0 | 250.0 | 252.0 | 244.0 | 250.0 | - | - | 249.0 | 274.0 |
| | 90% Distillation Temperature | 287.0 | 299.0 | 299.5 | 302.0 | 305.0 | - | - | 311.0 | 319.5 |
| Aromatic Content Vol. % | Total Aromatic Content | <1 | <1 | 16.4 | 15.1 | 18.4 | - | - | 18.9 | 15.2 |
| | Single Ring Aromatic Content | <1 | <1 | 14.5 | 13.3 | 16.2 | - | - | 16.7 | 13.3 |
| Cetane Number | | 73 | 72 | 60 | 63 | 56 | 62 | 53 | 54 | 55 |
| Cetane Index | | 83 | 81 | 55 | 56 | 52 | - | - | 53 | 53 |
| Pour Point °C | | <-30 | <-30 | <-30 | <-30 | <-30 | 12.0 | -10.0 | <-30 | -22.5 |
| Cold Filter Plugging Point °C | | -27.5 | -27.5 | -25.0 | -25.0 | -22.5 | 10.0 | -7.5 | -22.5 | -10.0 |
| Carbon Residue Content of 10% Distillation Residue | mass % | 0.01 | 0.01 | 0.01 | 0.01 | 0.10 | 0.03 | 0.02 | 0.01 | 0.01 |
| Ash Content | mass % | <0.01 | <0.01 | <0.01 | <0.01 | <0.01 | <0.01 | <0.01 | <0.01 | <0.01 |
| Water Content | mass ppm | 33 | 35 | 41 | 39 | 41 | 78 | 83 | 41 | 70 |
| Total Insoluble Content | mg/100 ml | 0.1 | 0.1 | 0.1 | 0.1 | 0.1 | 0.5 | 0.7 | 0.1 | 0.2 |
| Peroxide Number | mass ppm | 1 | 1 | 1 | 1 | 1 | 7 | 9 | 2 | 3 |
| Total Acid Number | mgKOH/g | 0.01 | 0.01 | 0.01 | 0.01 | 0.10 | 0.15 | 0.52 | 0.01 | 0.04 |
| Conductivity | pS/m | 98 | 109 | 99 | 105 | 100 | 110 | 106 | 111 | 97 |
| Wear Scar Diameter (WS 1.4) | um | 380 | 370 | 380 | 380 | 400 | 380 | 340 | 440 | 420 |
| Lubricity Improver | mass ppm | 100 | 100 | 100 | 100 | 100 | - | - | 100 | - |
| Low Temperature Fluidity Improver | mass ppm | - | - | - | 200 | 200 | 200 | 200 | 200 | 200 |
| Detergent | mass ppm | - | - | - | - | 150 | - | - | - | - |

**Table 7**

| | | Examples | | | | | Comparative Examples | | | |
|---|---|---|---|---|---|---|---|---|---|---|
| | | 1 | 2 | 3 | 4 | 5 | 1 | 2 | 3 | 4 |
| CO₂ Emissions | Well to Wheel gCO₂/MJ | 17.4 | 17.7 | 66.0 | 65.2 | 75.7 | 20.5 | 20.7 | 78.1 | 66.6 |
| | Relative Value | 22 | 23 | 85 | 83 | 97 | 26 | 27 | 100 | 85 |
| Fuel Efficiency | | 99 | 99 | 98 | 98 | 98 | 105 | 104 | 100 | 102 |
| Low Temperature Startability -7°C | | good | good | good | good | good | poor | poor | poor | poor |
| Part Stability | | pass | pass | pass | pass | pass | failure | failure | pass | failure |
| Oxidation Stability | | good | good | good | good | good | poor | poor | good | poor |

**Table 8**

| | | Examples | | | | | Comparative Examples | | | |
|---|---|---|---|---|---|---|---|---|---|---|
| | | 6 | 7 | 8 | 9 | 10 | 1 | 2 | 5 | 6 |
| CO₂ Emissions | Well to Tank gCO₂/MJ Tank to Wheel gCO₂/MJ | 17.5 (72.1) | 17.7 (71.9) | 7.6 59.3 | 7.1 58.6 | 5.8 70.7 | 20.5 (78.1) | 20.7 (78.7) | 5.2 73.5 | 8.3 58.8 |
| | Well to Wheel gCO₂/MJ | 17.5 | 17.6 | 66.9 | 65.7 | 75.8 | 20.5 | 20.7 | 78.7 | 67.1 |
| | Relative Value | 22 | 22 | 85 | 83 | 96 | 26 | 26 | 100 | 85 |
| Low Temperature Startability -18°C | | good | good | good | good | good | poor | poor | good | poor |
| Part Stability | | good | good | good | good | good | poor | poor | good | poor |
| Oxidation Stability | | good | good | good | good | good | poor | poor | good | poor |

**Table 9**

| | | Vegetable Fat 1 | Petroleum Hydrorefined Oil 3 |
|---|---|---|---|
| Density (15°C) | kg/m³ | - | 850 |
| Kinematic Viscosity (30°C) | mm²/s | - | 5.7 |
| C mass% | | - | 85 |
| H mass% | | - | 15 |
| Nitorogen Content | mass ppm | - | 15 |
| Sulfer Content | mass% | <1 | 10.0 |
| Total Acid Number | mgKOH/g | 0.07 | - |
| Percentage of Fatty Acid Group in Fat mass% | Butyric Acid Group | 0 | - |
| | Caproic Acid Group | 0 | - |
| | Caprylic Acid Group | 0 | - |
| | Capric Acid Group | 0 | - |
| | Lauric Acid Group | 0 | - |
| | Myristic Acid Group | 1 | - |
| | Palmitic Acid Group | 44 | - |
| | Stearic Acid Group | 5 | - |
| | Oleic Acid Group | 39 | - |
| | Linoleic Acid Group | 10 | - |
| | Linolenic Acid Group | 0 | - |

**Table 10**

| Hydrogenation Catalyst | Pt/Pd-silica/alimina |
|---|---|
| Processing Temperature °C | 250 |
| Hydrogen Partial Pressure MPa | 5.5 |
| LHSV h⁻¹ | 0.8 |
| Hydrogen/Oil Ratio NL/L | 600 |

**Table 11**

| | | Hydrotreated Vegetable Fat 1 | Hydrotreated Mixed Oil of Vegetable Fat 1 and Petroleam Hydrorefined Oil 3 | Metyl Ester of Vegetable Fat 1 | Petroleum Hydrorefined Oil 1 |
|---|---|---|---|---|---|
| Density | (15°C) kg/m³ | 780 | 830 | 874 | 821 |
| Kinematic Viscosity | (30°C) mm² | 3.0 | 4.0 | 5.5 | 3.6 |
| Distillation Characteristics °C | 10% Distillation Temperature | 251.0 | 252.0 | - | 188.5 |
| | 50% Distillation Temperature | 270.5 | 275.5 | - | 268.5 |
| | 90% Distillation Temperature | 303.5 | 304.0 | - | 333.0 |
| Total Aromatic Content | Vol. % | <1 | 11.5 | - | 17.7 |
| Single Ring Naphthene | | 0.0 | 20 | - | 25.0 |
| Cetane Number | | 78 | 65 | 62 | 57 |
| Sulfer Content | mass ppm | <1 | <1 | <1 | 4 |
| Oxygen Content | mass% | <0.1 | <0.1 | 11.9 | <0.1 |
| Total Acid Number | mgKOH/g | 0.01 | 0.01 | 0.15 | 0.01 |

**Table 12**

| | | Example 11 | Example 12 | Comparative Example 7 | Comparative Example 8 |
|---|---|---|---|---|---|
| Petroleum Hydrorefined Oil 1 | | 60 | 50 | 100 | 60 |
| Hydrotreated Vegetable Fat 1 | | 40 | | | |
| Hydrotreated Mixed Oil of Vegetable Fat 1 and Petroleam Hydrorefined Oil 3 | | | 50 | | |
| Methyl Ester of Vegetable Fat 1 | | | | | 40 |
| Density (15°C) | kg/m³ | 805 | 801 | 821 | 832 |
| Kinematic Viscosity (30°C) | mm²/s | 3.4 | 3.3 | 3.6 | 3.9 |
| Flash Point | °C | 77 | 75 | 72 | 73 |
| Sulfer Content | mass ppm | 3 | 1 | 4 | 3 |
| Oxygen Content | mass% | <0.1 | <0.1 | <0.1 | 2.4 |
| Distillation Characteristics °C | 10% Distillation Temperature | 191.0 | 193.0 | 188.5 | 194.0 |
| | 50% Distillation Temperature | 270.5 | 271.0 | 268.5 | 289.0 |
| | 90% Distillation Temperature | 325.0 | 319.0 | 333.0 | 336.0 |
| Total Aromatic Content Vol. % | | 10.6 | 14.6 | 17.7 | 14.2 |
| Naphthene Content Vol. % | | 12.0 | 22.5 | 25.0 | 12.0 |
| Cetane Number | | 65 | 62 | 57 | 58 |
| Cetane Index | | 66 | 69 | 57 | 57 |
| Carbon Residue Content of 10% Distillation Residue | mass% | 0.02 | 0.02 | 0.02 | 0.02 |
| Ash Content | mass% | <0.01 | <0.01 | <0.01 | <0.01 |
| Water Content | mass ppm | 35 | 34 | 35 | 46 |
| Total Insoluble Content | mg/100 mL | 0.1 | 0.1 | 0.1 | 0.2 |
| Peroxide Number | mms ppm | 4 | 4 | 5 | 6 |
| Total Acid Number | mgKOH/g | 0.01 | 0.01 | 0.01 | 0.04 |
| Acid Number Increase After Acceleration Oxidation Test | mgKOH/g | 0.02 | 0.02 | 0.02 | 0.15 |
| Conductivity | pS/m | 92 | 95 | 95 | 100 |
| Wear Scar Diameter (WS1.4) | µm | 360 | 360 | 430 | 410 |
| Lubricity Improver | mms ppm | 100 | 100 | 100 | - |
| Low Temperature Fluidity Improver | mms ppm | 200 | 200 | - | - |
| Detergent | mms ppm | 150 | 150 | - | - |

**Table 13**

| | | Examples | | Comparative Examples | |
|---|---|---|---|---|---|
| | | 11 | 12 | 7 | 8 |
| CO₂ Emissions gCO₂/MJ | Well to Wheel | 54.5 | 69.0 | 78.1 | 66.6 |
| | Relative Value | 70 | 88 | 100 | 85 |
| Fuel Efficiency | | 99 | 98 | 100 | 102 |
| Exhaus Gas (THC) | | 95 | 97 | 100 | 102 |
| Oxidation Stability | | good | good | good | poor |

**Table 14**

| Hydrotreating Catalyst | Pt/Pd-silica/alimina |
|---|---|
| Processing Temperature °C | 310 |
| Hydrogen Partial Pressure MPa | 5.0 |
| LHSV h⁻¹ | 0.7 |
| Hydrogen/Oil Ratio | 600 |

**Table 15**

| | | Hydrotreated Vegetable Fat 1 | Hydrotreated Mixed Oil of Vegetable Fat 1 and Petroleam Hydrorefined Oil 3 | Metyl Ester of Vegetable Fat 1 | Petroleum Hydrorefined Oil 1 | Petroleum Hydrorefined Oil 4 |
|---|---|---|---|---|---|---|
| Density (15°C) | kg/m³ | 787 | 835 | 874 | 821 | 792 |
| Kinematic Viscosity (30°C) | mm²/s | 3.5 | 4.2 | 5.5 | 3.6 | 1.3 |
| Distillation Characteristics °C | 10% Distillation Temperature | 166.5 | 254.0 | - | 188.5 | 168.0 |
| | 50% Distillation Temperature | 245.5 | 278.0 | - | 268.5 | 195.0 |
| | 90% Distillation Temperature | 297.5 | 305.0 | - | 333.0 | 235.0 |
| Aromatic Content | Vol. % | <1 | <1 | - | 17.7 | 17.9 |
| Pour Point | °C | 0.0 | 0.0 | 12.0 | -2.5 | <-30 |
| Cold Filter Plugging Point | °C | -1.0 | -2.0 | 16.0 | -1.0 | <-45 |
| Cetane Number | | 52 | 58 | 62 | 57 | 70 |
| Sulfer Content | mass ppm | <1 | <1 | <1 | 4 | 8 |
| Oxygen Content | mass % | <0.1 | <0.1 | 11.9 | <0.1 | <0.1 |
| Isoparaffin Ratio | | 0.60 | 0.62 | 0.00 | 0.55 | 0.44 |
| Total Acid Number | mgKOH/g | 0.01 | 0.01 | 0.15 | 0.01 | 0.00 |

**Table 16**

| | | Examples | | | Comparative Examples | | |
|---|---|---|---|---|---|---|---|
| | | 13 | 14 | 15 | 9 | 10 | 11 |
| Hydrotreated Vegetable Fat 1 | | | 20 | 20 | 100 | | 80 |
| Hydrotreated Vegetable Fat 4 | | 30 | 30 | 30 | | 30 | |
| HDO Treated Vegetable Fat 1 | | 70 | 50 | | | | |
| Hydrotreated mixed Oil of Vegetable Fat 1 and Hydrorefined Oil 3 | | | | 50 | | | |
| Methyl Ester of Vegetable Fat 1 | | | | | | 70 | 20 |
| Density (15°C) | | 789 | 795 | 819 | 821 | 850 | 832 |
| Kinematic Viscosity (30°C) | | 3.5 | 3.4 | 3.8 | 3.6 | 4.0 | 3.9 |
| Flash Point | | 78 | 65 | 72 | 72 | 90 | 73 |
| Sulfer Content | | <1 | 3 | 4 | 4 | <1 | 3 |
| Oxygen Content | | <0.1 | <0.1 | <0.1 | <0.1 | 8.3 | 2.4 |
| Distillation Characteristics °C | 10% Distillation Temperature | 167.0 | 175.0 | 208.5 | 188.5 | - | 194.0 |
| | 50% Distillation Temperature | 225.5 | 244.0 | 260.0 | 268.5 | - | 289.0 |
| | 90% Distillation Temperature | 270.0 | 302.0 | 304.0 | 333.0 | - | 336.0 |
| Aromatic Content | Vol. % | <1 | 8.9 | 14.9 | 17.7 | - | 14.2 |
| Cold Filter Plugging Point | °C | -8.0 | -12.0 | -11.0 | -1.0 | 7.0 | 2.0 |
| Pour Point | °C | -12.5 | -15.0 | -15.0 | -2.5 | 5.0 | 0.0 |
| Cetane Number | | 58 | 61 | 63 | 57 | 55 | 58 |
| Cetane Index | | 60 | 63 | 58 | 57 | - | 57 |
| Carbon Residue Content of 10% Distillation Residue | mass% | 0.01 | 0.01 | 0.01 | 0.02 | 0.03 | 0.02 |
| Ash Content | mass% | <0.01 | <0.01 | <0.01 | <0.01 | <0.01 | <0.01 |
| Water Content | mass ppm | 33 | 39 | 40 | 35 | 78 | 46 |
| Total Insoluble Content | mg/100mL | 0.1 | 0.1 | 0.1 | 0.1 | 0.4 | 0.2 |
| Isoparaffin Ratio | | 1.18 | 1.23 | 1.30 | 2.15 | 0.15 | 0.78 |
| Peroxide Number | mms ppm | 1 | 1 | 1 | 3 | 5 | 6 |
| Total Acid Number | | 0.01 | 0.01 | 0.01 | 0.01 | 0.11 | 0.04 |
| Acid Number Increase After Acceleration Oxidation Test | mgKOH/g | 0.01 | 0.02 | 0.02 | 0.02 | 0.20 | 0.15 |
| Conductivity | pS/m | 98 | 105 | 100 | 95 | 110 | 100 |
| Wear Scar Diameter (WS1.4) | µm | 380 | 390 | 400 | 430 | 380 | 410 |
| Lubricity Improver | mms ppm | 100 | 100 | 100 | 100 | - | - |
| Low Temperature Fluidity Improver | mms ppm | 150 | 200 | 200 | - | 150 | 150 |
| Detergent | mms ppm | - | - | - | - | - | - |

**Table 17**

| | | Examples | | | Comparative Examples | | |
|---|---|---|---|---|---|---|---|
| | | 13 | 14 | 15 | 9 | 10 | 11 |
| CO₂ Emissions gCO₂/MJ | Well to Wheel | 33.7 | 46.4 | 68.3 | 78.1 | 20.5 | 66.6 |
| | Relative Value | 43 | 59 | 87 | 100 | 26 | 85 |
| Low Temperature -7°C Startability | | good | good | good | poor | poor | poor |
| Oxidation Stability | | good | good | good | good | poor | poor |

### [Brief Description of the Drawing]

Fig. 1 shows transient driving mode simulating actual running in the vehicle exhaust gas test and fuel efficiency test.

### [Applicability in the Industry]

According to the present invention, there is provided a gas oil composition which is excellent in life cycle CO2 emission properties, fuel efficiency, oxidation stability, less affective to parts properties, and low temperature startability.

## Claims

1. A gas oil composition comprising a base gas oil produced by contacting an animal or vegetable fat and/or a component originating therefrom, with a hydrotreating catalyst containing at least one or more metals selected from the group consisting of the Groups 6A and 8 metals of the periodic table and an inorganic oxide with acidic properties, under hydrogen pressure, the sulfur and oxygen contents of the gas oil composition being 5 ppm by mass or less and 1 percent by mass or less, respectively.

2. A gas oil composition comprising a base gas oil produced by contacting a mixed oil of an animal or vegetable fat and/or a component originating therefrom and a petroleum base oil produced by refining crude oil, with a hydrotreating catalyst containing at least one or more metals selected from the group consisting of the Groups 6A and 8 metals of the periodic table and an inorganic oxide with acidic properties under hydrogen pressure, the sulfur and oxygen contents of the gas oil composition being 5 ppm by mass or less and 1 percent by mass or less, respectively.

3. The gas oil composition according to claim 1 or 2 wherein the oil composition comprises a base gas oil mixed with a hydrorefined oil from crude oil at a ratio of 30 to 50 percent by volume : 50 to 70 percent by volume, the base gas oil being produced by contacting an animal or vegetable fat and/or a component originating therefrom, with a catalyst comprising a porous inorganic oxide containing two or more elements selected from the group consisting of aluminum, silicon, zirconium, boron, titanium, and magnesium and at least one or more metals selected from the group consisting of the Group 8 metals of the periodic table supported thereon, under the conditions where the hydrogen pressure is from 2 to 13 MPa, the liquid hourly space velocity is from 0.1 to 3.0 h⁻¹, the hydrogen/oil ratio is from 150 to 1500 NL/L, and the reaction temperature is from 150 to 380°C, and
the gas oil composition having the following properties:
a 90% distillation temperature of 360°C or lower;
a total aromatic content of 15 percent by volume or less;
a cetane index of 45 or greater;
a sulfur content of 5 ppm by mass or less;
an oxygen content of 1 percent by mass or less;
a triglyceride content of 0.01 percent by mass or less;
an acid number of 0.13 mgKOH/g or less;
an increase in acid number after an oxidation
stability test of 0.12 mgKOH/g or less; and
a single ring naphthene content of 10 percent by volume or more.

4. The gas oil composition according to claim 1 or 2 wherein the gas oil composition comprises a base gas oil mixed with a hydrorefined oil from crude oil at a ratio of 30 to 50 percent by volume : 50 to 70 percent by volume, the base gas oil being produced by contacting a mixed oil of 10 to 90 percent by volume of an animal or vegetable fat and/or a component originating therefrom and 90 to 10 percent by volume of a petroleum base oil with a sulfur content of 15 ppm by mass or less, produced by refining crude oil, with a catalyst comprising a porous inorganic oxide containing two or more elements selected from the group consisting of aluminum, silicon, zirconium, boron, titanium, and magnesium and at least one or more metals selected from the group consisting of the Group 8 metals of the periodic table supported thereon, under the conditions where the hydrogen pressure is from 2 to 13 MPa, the liquid hourly space velocity is from 0.1 to 3.0 h⁻¹, the hydrogen/oil ratio is from 150 to 1500 NL/L, and the reaction temperature is from 150 to 380°C, the gas oil composition having the following properties:
a 90% distillation temperature of 360°C or lower;
a total aromatic content of 15 percent by volume or less;
a cetane index of 45 or greater;
a sulfur content of 5 ppm by mass or less;
an oxygen content of 1 percent by mass or less;
a triglyceride content of 0.01 percent by mass or less;
an acid number of 0.13 mgKOH/g or less;
an increase in acid number after an oxidation stability test of 0.12 mgKOH/g or less; and
a single ring naphthene content of 10 percent by volume or more.

5. A gas oil composition according to claim 1 or 2 wherein the oil composition comprises a base gas oil with an isoparaffin/n-paraffin ratio of 0.2 or greater, mixed with a hydrorefined oil from crude oil at a ratio of 30 to 50 percent by volume : 50 to 70 percent by volume, the base gas oil being produced by contacting an animal or vegetable fat and/or a component originating therefrom, with a catalyst comprising a support containing a crystalline molecular sieve and one or more metals selected from the group consisting of the Groups 6A and 8 metals of the periodic table supported thereon, under the conditions where the hydrogen pressure is from 2 to 13 MPa, the liquid hourly space velocity is from 0.1 to 3.0 h⁻¹, the hydrogen/oil ratio is from 250 to 1500 NL/L, and the reaction temperature is from 150 to 380°C, and the gas oil composition having the following properties:
a 90% distillation temperature of 360°C or lower;
a total aromatic content of 15 percent by volume or less;
a cetane index of 45 or greater;
a sulfur content of 1 ppm by mass or less;
an oxygen content of 1 percent by mass or less;
a triglyceride content of 0.01 percent by mass or less;
an acid number of 0.13 mgKOH/g or less;
an increase in acid number after an oxidation
stability test of 0.12 mgKOH/g or less;
a cold filter plugging point (CFPP) of -5°C or lower;
a pour point (PP) of -10°C or lower; and
a isoparaffin/n-paraffin ratio in the paraffin contained in the composition of 0.80 or greater.

6. The gas oil composition according to claim 1 or 2 wherein the oil composition comprises a base gas oil with an isoparaffin/n-paraffin of 0.2 or greater, mixed with a hydrorefined oil from crude oil at a ratio of 30 to 50 percent by volume : 50 to 70 percent by volume, the base gas oil being produced by contacting a mixed oil of 10 to 90 percent by volume of an animal or vegetable fat and/or a component originating therefrom and 90 to 10 percent by volume of a petroleum base oil with a sulfur content of 15 ppm by mass or less produced by refining crude oil, with a catalyst comprising a support containing a crystalline molecular sieve and one or more metals selected from the group consisting of the Groups 6A and 8 metals of the periodic table, supported thereon, under the conditions where the hydrogen pressure is from 2 to 13 MPa, the liquid hourly space velocity is from 0.1 to 3.0 h⁻¹, the hydrogen/oil ratio is from 250 to 1500 NL/L, and the reaction temperature is from 150 to 380°C, the gas oil composition having the following properties:
a 90% distillation temperature of 360°C or lower;
a total aromatic content of 15 percent by volume or less;
a cetane index of 45 or greater;
a sulfur content of 1 ppm by mass or less;
an oxygen content of 1 percent by mass or less;
a triglyceride content of 0.01 percent by mass or less;
an acid number of 0.13 mgKOH/g or less;
an increase in acid number after an oxidation
stability test of 0.12 mgKOH/g or less;
a cold filter plugging point (CFPP) of -5°C or lower;
a pour point (PP) of -10°C or lower; and
a isoparaffin/n-paraffin ratio in the paraffin contained in the composition of 0.80 or greater.

7. A gas oil composition comprising a mixture of the aforesaid gas oil compositions according to any of claims 1 to 6 and a hydrorefined oil from crude oil.

8. The gas oil composition according to any of claims 1 to 7 wherein it has the following properties:
a flash point of 50°C or higher;
a 90% distillation temperature of 350°C or lower;
a pour point (PP) of -7.5°C or lower;
a cold filter plugging point (CFPP) of -5°C or lower;
a carbon residue of the 10% distillation residue of 0.1 percent by mass or less;
a cetane index of 45 or greater; and
a kinematic viscosity at 30°C of 2.5 mm²/s.

9. The gas oil composition according to any of claims 1 to 7 wherein it has the following properties:
a 10% distillation temperature of from 140°C or higher to 190°C or lower;
a flash point of 45°C or higher;
a 90% distillation temperature of 330°C or lower;
a pour point (PP) of -20°C or lower;
a cold filter plugging point (CFPP) of -12°C or lower;
a carbon residue of the 10% distillation residue of 0.1 percent by mass or less;
a cetane index of 45 or greater; and
a kinematic viscosity at 30°C of 2.0 mm²/s.
